# EUROPEAN PATENT APPLICATION

(11) **EP 4 736 667 A1**
(43) Date of publication of application: **06.05.2026**
(21) Application number: 23943103.4
(22) Date of filing: 24.07.2023
(51) Int. Cl.: A23L 27/10, A23L 5/20

(54) **SWEETNESS COMPOSITION AND PREPARATION METHOD THEREOF**

(30) Priority: 28.06.2023 CN 202310777641
(71) Applicant: GUILIN GFS MONK FRUIT CORPORATION, Guilin, Guangxi 541006 (CN)
(72) Inventor: LI, Jian, Guilin, Guangxi 541006 (CN); ZHU, Xuehua, Guilin, Guangxi 541006 (CN); HUANG, Lingyu, Guilin, Guangxi 541006 (CN); TAN, Tailiang, Guilin, Guangxi 541006 (CN); XU, Bo, Guilin, Guangxi 541006 (CN); LAN, Feisi, Guilin, Guangxi 541006 (CN); LI, Xingyu, Guilin, Guangxi 541006 (CN); LIANG, Zhenhua, Guilin, Guangxi 541006 (CN)
(74) Representative: CMS Cameron McKenna Nabarro Olswang LLP
(86) International application number: PCT/CN2023/108876
(87) International publication number: WO 2025/000615

(57) **Abstract**

A sweetness composition, based on the total weight of the sweetness composition, comprising: 70% to 85% of mogroside V; 5% to 12% of 11-O-mogroside V; 0 to 0.5% of simonoside I; 0 to 0.05% of mogroside II and mogroside III; 0 to 0.5% of protein; and 0 to 0.5% of total sugar. Also disclosed is a method for preparing the sweetness composition, comprising the following steps: extracting Siraitia grosvenorii to obtain an extract; clarifying the extract to obtain a clarified liquid; sequentially treating the clarified liquid with a strong acid cation exchange resin column and a weak alkaline anion exchange resin column to obtain an ion exchange treated liquid; and the ion exchange treated liquid entering an adsorption resin column combination for multi-stage adsorption separation and elution, collecting the eluate, and drying to obtain the sweetness composition, wherein, the ion exchange treatment step needs to be performed before the multi-stage adsorption separation step.

## Description

### TECHNICAL FIELD

This application relates to the field of extraction technology, in particular to a sweetening composition and a preparation method thereof.

### BACKGROUND

The fruit of Luo Han Guo (*Siraitia grosvenorii*) is a mature fruit of perennial herbaceous vines of *Siraitia* in Cucurbitaceae. It is sweet in flavor and cool in nature, belonging to the lung and large intestine meridians, with the functions of clearing heat, moistening the lung, smoothing the intestine and relieving constipation. It is a traditional Chinese medicine commonly used in China, and it is also the first batch of medicinal and edible homologous plants approved by the Ministry of Health. Luo Han Guo is mainly produced in Guilin, Guangxi, and is widely planted in Yongfu, Lingui, Longsheng and other counties in Guangxi. In recent years, with the rapid growth of demand for mogroside sweeteners, the planting of Luo Han Guo has gradually expanded to the cities and counties of Guizhou and Hunan adjacent to Guilin.

Mogroside is the general name of cucurbitane triterpene saponins with sweet taste characteristics in the fruit of Luo Han Guo, and it is a kind of triterpene glucoside, and its aglycone is triterpene alcohol. Particularly, Mogroside V is the overriding sweetening ingredient, which is non-toxic, low in calorie, high in sweetness, and good in thermal stability, and it is a natural sweetener, which is an important index for content control in the national food safety standard of mogroside (GB1886.77-2016). At present, mogroside has been widely used in food, beverage, dairy products etc. as a low calorie natural sweetener to replace sucrose. In current market, the purity of Mogroside V of mogroside products is mainly 40-50%, and only a few products have a purity of Mogroside V of 60%. In addition to various sweet glycosides with extremely sweet taste, these mogroside products also comprise a small amount of bitter glycosides, such as Mogroside II, Mogroside III, etc. This is because some bitter ingredients brought by immature or slightly less mature fruit of Luo Han Guo are mixed in the extraction from fresh fruit of Luo Han Guo, which has a negative impact on the overall taste of the mogroside products. In addition, the high protein content and certain carbohydrate content of fresh fruit of Luo Han Guo are usually retained in the current mogroside products, and the existence of these nutritional ingredients has formed certain restrictions on the applications that require high shelf life and energy intake of products.

### SUMMARY OF THE INVENTION

Although researchers have also developed some preparation methods of high-purity Mogroside V to improve the quality of mogroside products, for example, the methods in patent CN110669095A "A Method for the Extraction of High Purity Mogroside V" and CN101402665B "Method for the Preparation of Mogroside V", although both methods obtained Mogroside V products with a purity of 99% or more, the purification technology with the core of reverse phase chromatography using C18 filler with particle size of 0.45µm is adopted in all the processes, The technology uses medium and high pressure to prepare liquid chromatography, which has large equipment investment and small production scale, and toxic solvents such as acetonitrile are used in the process, which is not conducive to food safety control.

Patent CN101407535B "a preparation method of high-purity Mogroside V" adopts the following steps: dissolving with methanol, filtrating, precipitating the filtrate with acetone, filtrating to obtain the precipitation and performing silica gel chromatography, eluting with mixed solvent of aliphatic ester and ethanol, then the eluent is collected, concentrated and crystalized to obtain Mogroside V with a purity of 98% or more. The process uses organic solvents such as acetone, aliphatic esters, and ethanol etc., and the preparation amount prepared by silica gel chromatography is small, making it difficult to reuse and carry out large-scale production.

EP2622969A1 discloses a sweetener mixture, comprising Mogroside V with a purity of 60-70%. The high-purity mogroside can be obtained by a process for preparation of highly purified mogrosides mixture from low purity mogrosides mixture. Although the method innovatively uses a column system comprising a plurality of adsorption columns, a complex combination of acidic, basic and aqueous alcohol solutions is used to elute the impurities, and the content of Mogroside V obtained by this method is low, which fails to provide a control method and effect on the content of bitter glycosides - Mogroside II and Mogroside III from raw materials of immature or slightly less mature fruit of Luo Han Guo, and also fails to provide a control method and effect on contents of protein and carbohydrate that affect the application of the products.

CN104059122A disclosed a preparation method of high-purity Mogroside V. The core of the method of purifying Mogroside V is the innovative use of unconventional anion and cation exchange resins with low particle size of 100-200 meshes (74-149µm) as chromatographic fillers, and the use of aqueous solution with specific pH gradient for elution to obtain the target product. It is an untypical innovative method to improve Mogroside V by using ion exchange resin but not for deionization. This method also fails to provide a control method and effect on the content of bitter glycosides - Mogroside II and Mogroside III from raw materials of immature or slightly less mature fruit of Luo Han Guo, and also fails to provide a control method and effect on contents of protein and carbohydrate that affect the application of the products.

In order to overcome the defects of the prior art, the present application provides a sweet glycoside composition with low protein, low bitter glycoside, low carbohydrate content and high purity of Mogroside V, and the preparation method thereof.

The specific technical solutions of the present application are as follows:
On the one hand, the present application provides a sweetening composition, based on the total weight of the sweetening composition, which comprises:
70-85% Mogroside V;
5-12% 11-O-Mogroside V;
0-0.5% Siamenoside I;
0-0.05% Mogroside II and Mogroside III; and
0-0.5% protein and 0-0.5% total carbohydrate.

On the other hand, the present application also provides a method for preparing a sweetening composition, which comprises the following steps:
extraction: extracting from the fruit of Luo Han Guo to obtain an extraction solution;
clarification: clarifying the extraction solution to obtain a clarified liquid;
ion exchange treatment: sequentially treating the clarified liquid with a strongly acidic cation exchange resin column and a weakly basic anion exchange resin column to obtain an ion exchange treatment solution; and
multistage adsorption separation: making the ion exchange treatment solution run through the adsorption resin column combination for multistage adsorption separation, eluting, collecting the eluent, and drying to obtain a sweetening composition;
wherein the step of ion exchange treatment should be carried out before the step of multistage adsorption separation.

Further, in the method for preparing the sweetening composition of the present application, the ion exchange treatment solution sequentially runs through the first, second, ..., and nth (n≥2) adsorption resin columns of the adsorption resin column combination for multistage adsorption separation, wherein the separated column liquid obtained from each adsorption resin column directly runs through the next adsorption column; or
the ion exchange treatment solution sequentially passes through the first, second, ..., and the nth (n≥2) adsorption resin column of the adsorption resin column combination for multistage adsorption separation, wherein, after passing through each of the first to (x-1)th (n≥x≥2) adsorption resin columns, the separated column liquid obtained after passing through each adsorption resin column are collected and combined, and then loaded into the next adsorption resin column for separation; then, the column liquid collected after passing through the (x-1)th adsorption resin column is loaded to sequentially run through the xth, (x+1)th, (x+2)th,..., and nth adsorption resin columns for adsorption and separation.

Further, in the method for preparing the sweetening composition of the present application, after the multistage adsorption separation, the sweetening composition of the present application is obtained from each of the xth to nth (2≤x≤n) adsorption resin columns.

Further, in the method for preparing the sweetening composition of the present application, in the step of multistage adsorption separation, the mass of Mogroside V in the ion exchange treatment solution passing through the first, ..., (x-1)th (2≤x≤n) adsorption resin columns is 1-4 times, preferably 1-3 times, more preferably 1.5-3 times of the sum of the saturated adsorption mass of the first to (x-1)th adsorption resin columns for Mogroside V.

Further, the method for preparing the sweetening composition of the present application further comprises a step of mogroside enrichment through the adsorption resin column A" after the step of clarification and before the step of ion-exchange treatment.

Further, in the method for preparing the sweetening composition of the present application, the adsorption resin column A" is a weakly polar macroporous adsorption resin column;
preferably, the adsorption resin column A" is a macroporous adsorption resin column with polyethylene divinylbenzene as the skeleton material;
preferably, the particle size of the resin is 250-1250µm, more preferably 250-450µm; and
preferably, the model of the resin of the adsorption resin column A" is any one selected from the group consisting of: LX-15, D101, AB-8, SP700, XD16N and XD1600N, more preferably SP700.

Further, in the method for preparing the sweetening composition of the present application, the extraction solution is obtained by extracting with hot water.

Further, in the method for preparing the sweetening composition of the present application, the clarified liquid is obtained by centrifugation and/or filtration.

Further, in the method for preparing the sweetening composition of the present application, the particle size of the resin of the strongly acidic cation exchange resin column is 300-1100µm, preferably 300-600µm;
preferably, the resin of the strongly acidic cation exchange resin column is any one selected from the group consisting of: Marathon MSC, AMBERLITE FPC22H, DIAION SK series and DIAION PK series, more preferably Marathon MSC;
preferably, the particle size of the resin of the weakly basic anion exchange resin column is 350-1250µm, more preferably 350-600µm; and
preferably, the resin of the weakly basic anion exchange resin column is any one selected from the group consisting of: Marathon WBA, SCAV2, FPA53 and LX-T5, more preferably Marathon WBA or SCAV2.

Further, in the method for preparing the sweetening composition of the present application, each adsorption resin column used in the step of multistage adsorption separation is weakly polar macroporous adsorption resin column;
preferably, each adsorption resin column is macroporous adsorption resin column with a skeleton material of polyethylene divinylbenzene; and
preferably, the resin of each adsorption resin column is any one selected from the group consisting of: LX-15, D101, AB-8, SP700, XD16N and XD1600N, more preferably SP700.

Further, in the method for preparing the sweetening composition of the present application, the multistage adsorption separation is carried out through two or more, preferably two to six adsorption resin columns.

Further, in the method for preparing the sweetening composition of the present application, based on the total weight of the sweetening composition, the sweetening composition comprises:
70-85% Mogroside V;
5-12% 11-O-Mogroside V;
0-0.5% Siamenoside I;
0-0.05% Mogroside II and Mogroside III; and
0-0.5% protein and 0-0.5% carbohydrate.

Further, in the method for preparing the sweetening composition of the present application, in the step of multistage adsorption separation, after the ion exchange treatment solution is loaded, the adsorption resin column combination is first eluted with water or a first organic solvent, and then eluted with a second organic solvent;
preferably, the first organic solvent is ethanol with concentration of 10-30%; and
preferably, the second organic solvent is any one or two selected from the group consisting of hydrophilic ketones and lower alcohols;
more preferably, the second organic solvent is any one or more selected from the group consisting: of methanol, ethanol, propanol and acetone;
still more preferably, the second organic solvent is ethanol with concentration of 55% or more.

### TECHNICAL EFFECT OF THE INVENTION

In the method of the present application, firstly, ionic substances such as inorganic salts, organic acids, alkaloids, flavones and proteins etc. in the extracting solution of the fruit of Luo Han Guo are removed by a combination of cation exchange resin and anion exchange resin; then the chromatography is carried out by multi-column adsorption resin, wherein a molecular exclusion chromatography for adsorbing mogroside ingredients is formed by controlling the combination of the resin amount of each column and the loading amount; the bitter Mogroside II and Mogroside III are accumulated in the resin that first run through the adsorption resin column by taking advantage of the slight difference of the binding capacity of different mogroside ingredients to the resin, and 11-O-Mogroside V, Mogroside V, and other ingredients with slightly weak binding capacity to the resin are pushed into the resin column connected in series, and then the target product is obtained through elution with different concentrations of alcohol. In addition to the separation and removal of bitter glycosides, the present application also makes 11-O-Mogroside V and Mogroside V form a better combination, so that the product has a better taste than pure Mogroside V.

### BRIEF DESCRIPTION OF THE DRAWINGS

Fig. 1 shows the HPLC chromatogram of various glycosides in the fruit of Luo Han Guo in a specific embodiment of the present application.
Fig. 2 shows the high-performance liquid chromatography of the product obtained by eluting with 60% ethanol in the D-column of Example 5 of the present application.

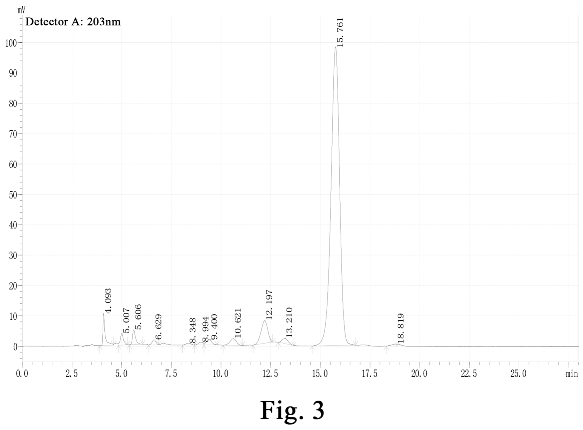

Fig. 3 shows the high-performance liquid chromatography of the product obtained by eluting with 60% ethanol in the E-column of Example 5 of the present application.

### SPECIFIC EMBODIMENTS

The following provides an explanation of the exemplary embodiments of the present application, including various details of the embodiments for better understanding, which should be considered merely exemplary. Therefore, ordinary skilled in the art should recognize that various changes and modifications can be made to the embodiments described herein without departing from the scope and spirit of this application. Similarly, for clarity and conciseness, descriptions of well-known functions, structures, and reagents have been omitted from the following descriptions.

On one hand, the present application provides a sweetening composition, wherein, based on the total weight of the sweetening composition, it comprises:
70-85% Mogroside V;
5-12% 11-O-Mogroside V;
0-0.5% Siamenoside I;
0-0.05% Mogroside II and Mogroside III; and
0-0.5% protein and 0-0.5% total carbohydrate.

The Mogroside V in the present application is a cucurbitane type triterpene saponin, and its chemical structure is known in the art. In some embodiments, the sweetening composition can comprise, for example, 70%, 70.5%, 71%, 71.5%, 72%, 72.5%, 73%, 73.5%, 74%, 74.5%, 75%, 75.5%, 76%, 76.5%, 77%, 77.5%, 78%, 78.5%, 79%, 79.5%, 80%, 80.5%, 81%, 81.5%, 82%, 82.5%, 83%, 83.5%, 84%, 84.5%, 85% or any range therebetween of Mogroside V based on the total weight of the sweetening composition.

The 11-O-Mogroside V of the present application is a cucurbitane type triterpene saponin and a sweetener. Its chemical structure is known in the art, and it has strong antioxidant activity and significant inhibitory effect on active oxygen substances. In some embodiments, the sweetening composition may comprise, for example, 5%, 5.2%, 5.5%, 5.8%, 6%, 6.2%, 6.5%, 6.7%, 7%, 7.3%, 7.5%, 7.7%, 8%, 8.2%, 8.5%, 8.8%, 9%, 9.2%, 9.5%, 9.8%, 10%, 10.3%, 10.5%, 10.8%, 11%, 11.2%, 11.5%, 11.7%, 12% or any range therebetween of 11-O-Mogroside V based on the total weight of the sweetening composition.

Siamenoside I is a cucurbitane type triterpene saponin, which is the sweetest ingredient among mogrosides. Its sweetness is about 460-563 times that of sucrose, but its natural abundance in the fruit of Luo Han Guo is extremely low. In some embodiments, the sweetening composition may comprise, for example, 0%, 0.01%, 0.02%, 0.03%, 0.04%, 0.05%, 0.06%, 0.07%, 0.08%, 0.09%, 0.1%, 0.11%, 0.12%, 0.13%, 0.14%, 0.15%, 0.16%, 0.17%, 0.18%, 0.19%, 0.2%, 0.21%, 0.22%, 0.23%, 0.24%, 0.25%, 0.26%, 0.27%, 0.28%, 0.29%, 0.3%, 0.31%, 0.32%, 0.33%, 0.34%, 0.35%, 0.36%, 0.37%, 0.38%, 0.39%, 0.4%, 0.41%, 0.42%, 0.43%, 0.44%, 0.45%, 0.46%, 0.47%, 0.48%, 0.49%, 0.5%, or any range therebetween of Siamenoside I based on the total weight of the sweetening composition .

Mogrosides usually have varying numbers (2 to 6) of glucose units connected to carbon 3 and carbon 24 of the triterpene backbone. Mogroside II is the simplest mogroside, with one glucose residue connected to each of carbon 3 and carbon 24, while Mogroside III is different in that it has an additional glucose residue connected to carbon 24. In some embodiments, the total weight of Mogroside II and Mogroside III comprised in the sweetening composition may be, for example, 0%, 0.001%, 0.005%, 0.01%, 0.02%, 0.03%, 0.04%, 0.05% or any range therebetween of the total weight of the sweetening composition.

In some embodiments, the sweetening composition may comprise, for example, 0%, 0.01%, 0.05%, 0.1%, 0.15%, 0.2%, 0.25%, 0.3%, 0.35%, 0.4%, 0.45%, 0.5%, or any range therebetween of protein based on the total weight of the sweetening composition. The content of protein of the present application can be determined by any suitable method or technique known in the art, such as the first method of GB5009.5-2016.

In some embodiments, the sweetening composition may comprise, for example, 0%, 0.01%, 0.05%, 0.1%, 0.15%, 0.2%, 0.25%, 0.3%, 0.35%, 0.4%, 0.45%, 0.5%, or any range therebetween of total carbohydrate based on the total weight of the sweetening composition. The content of the total carbohydrate in the present application refers to the total content of monosaccharides and disaccharides based on the dry weight. The content of the total carbohydrate of the present application can be determined by any suitable method or technique known in the art, such as the first method of GB 5009.8-2016, HPLC-RID.

On the other hand, the present application also provides a method for preparing a sweetening composition, which comprises the following steps:
extraction: extracting from the fruit of Luo Han Guo to obtain an extraction solution;
clarification: clarifying the extraction solution to obtain a clarified liquid;
ion exchange treatment: sequentially treating the clarified liquid with a strongly acidic cation exchange resin column and a weakly basic anion exchange resin column to obtain an ion exchange treatment solution;
multistage adsorption separation: making the ion exchange treatment solution run through the adsorption resin column combination for multistage adsorption separation, eluting, collecting the eluent, and drying to obtain a sweetening composition;
wherein the step of ion exchange treatment should be carried out before the step of multistage adsorption separation.

Based on the conventional production process of mogroside - the combined process of "the fruit of Luo Han Guo → crushing → water extraction → macroporous resin adsorption → resin decoloration", the present application has studied the selectivity difference of Mogroside V, other mogrosides and other ingredients adsorbed in macroporous adsorption resin. It was found that the distribution of Mogroside V, other mogrosides and other ingredients in each column can be adjusted by controlling the loading amount when the extract of the fruit of Luo Han Guo obtained after ion exchange treatment passing through the combination of multiple macroporous resin columns, and the sweetening compositions comprising various mogrosides can be obtained through elution and drying of each column. The content of Mogroside V in the sweetening composition can reach 70-85%.

In some embodiments, the method for preparing the sweetening composition of the present application comprises: contacting the fruit of Luo Han Guo with water to prepare an extraction solution, which comprises Mogroside V, other terpene glycosides and carbohydrates; clarifying the extraction solution to remove pectin and proteins, etc., so as to facilitate subsequent processing; contacting the clarified liquid with a strongly acidic cation exchange resin column and a weakly basic anion exchange resin column sequentially to decolorize, deacidify, and further deproteinize; contacting the ion exchange treatment solution obtained after the ion exchange treatment with an adsorption resin column combination, and eluting to maximize the contents of Mogroside V, 11-O-Mogroside V and Siamenoside I in the eluent, while minimize the contents of Mogroside II, Mogroside III and proteins, finally drying to obtain the sweetening composition of the present application.

In some embodiments, the extraction solution is obtained by extracting with hot water, the temperatures of the hot water can be such as 70°C, 72°C, 74°C, 76°C, 78°C, 80°C, 82°C, 84°C, 86°C, 88°C, 90°C, 92°C, 94°C, 96°C, 98°C, or 100°C.

In some embodiments, the step of extraction is crushing the fresh or dried fruit of Luo Han Guo, and extracting with hot water to obtain the extraction solution.

In the present application, clarification can be carried out using any suitable method known in the art, such as centrifugation and/or filtration, preferably ultrafiltration, for example, an ultrafiltration membrane may be used. Alternatively, clarification can be carried out by phosphate or pectinase treatment. Pectinase in the form of a mixture of commercially available enzymes comprising pectinase can be used to lyse pectin in the extraction solution and precipitate peptides and proteins stabilized by pectin.

In some embodiments, the extraction solution is initially clarified by centrifugation, and the clear liquid is further clarified by ultrafiltration with ceramic membrane to obtain the clarified liquid.

In the method of the present application, ion exchange resin is used to remove inorganic salts, proteins, amino acids and charged ingredients from the clarified liquid obtained from the fruit of Luo Han Guo, while retaining the maximum amount of some terpene glycosides, especially Mogroside V to the maximum, which helps to obtain a sweetening composition with pure taste. Ion exchange resin is a polymer that allows specific ions within the polymer to exchange with ions in the solution passing through the resin. The ion exchange resin can be insoluble acid or base, and its salt is also insoluble, so that the resin can be exchanged with positively charged ions (cation exchange resins) or negatively charged ions (anion exchange resins). In the present application, a strongly acidic cation exchange resin column and a weakly basic anion exchange resin column are sequentially used for ion exchange treatment, which can retain the strong sweetness in the sweetening composition to the greatest extent. It should be understood that the ion exchange resin used herein can be obtained from any source, including any commercial source.

In some embodiments, the compound causing the flavor of grass, soil, or odor, and bitterness is a bitter protein melanin. In some embodiments, the compound is a bitter peptide. In some embodiments, the compound is a bitter terpenoid. In some embodiments, the compound is a bitter phenol. In some embodiments, the compound is a bitter polyphenol. In some embodiments, the compound is a bitter phenolic oligomer. In some embodiments, the compound is a bitter thick polyphenol. In some embodiments, the compound is a bitter terpenoid glycoside.

In some embodiments, the particle size of the resin of the strongly acidic cation exchange resin column is 300-1100µm, and resin particle size of the resin of the weakly basic anion exchange resin column is 350-1250µm.

In some embodiments, the particle size of the resin of the strongly acidic cation exchange resin column is 300-600µm, and the particle size of the resin of the weakly baisc anion exchange resin column is 350-600µm.

In some embodiments, the resin of the strongly acidic cation exchange resin column is any one selected from the group consisting of Marathon MSC, AMBERLITE FPC22H, DIAION SK series, and DIAION PK series; and the resin of the weakly basic anion exchange resin column is any one selected from the group consisting of Marathon WBA, SCAV2, FPA53, and LX-T5.

In some embodiments, the resin of the strongly acidic cation exchange resin column is Marathon MSC, and the resin of the weakly basic anion exchange resin column is Marathon WBA or SCAV2.

Generally, based on the selectivity of macroporous adsorption resin, Mogroside IV, Siamenoside I, Mogroside II, Mogroside III, mogrol and other non-sweet glycosides with weaker polarity than Mogroside V will have stronger retention on the resin than Mogroside V in the usual water and alcohol solvent system. However, ingredients with greater polarity than Mogroside V, such as 11-O-Mogroside V and other non-sweet glycosides, will have weaker retention than Mogroside V. These differences in resin selectivity are not obvious in typical single column resin adsorption and are difficult to be fully utilized. When we use multi column combinations, the ingredients in the material can accumulate and amplify based on differences in polarity or adsorption selectivity, forming a similar effect to exclusion chromatography. When the resin column is loaded, the ingredients with weak polarity or strong relative adsorption performance will gradually accumulate in the front columns. When the loading amount is enough, these ingredients will occupy the adsorption capacity of the front resin columns, while Mogroside V and other ingredients with stronger polarity will be eluted or pushed to the rear chromatography columns due to the slightly weak competitive adsorption capacity. The ingredients running through the rear columns also have differences in polarity and resin adsorption capacity. Ingredients with stronger polarity than Mogroside V will be pushed to the rear column or column-passing liquid due to competitively adsorption of Mogroside V, which makes the composition of the ingredient and the content of Mogroside V in different adsorption columns have significant differences.

In some embodiments, the ion exchange treatment solution sequentially passes through the first, second, ..., and nth (n≥2) adsorption resin column of the adsorption resin column combination for multistage adsorption separation, wherein after passing through each of the first to (x-1)th (n≥x≥2) adsorption resin columns, the separated column liquid obtained after passing through each adsorption resin column are collected and combined, and then loaded into the next adsorption resin column for separation; then, the liquid collected after passing through the (x-1)th adsorption resin column is loaded to sequentially run through the xth, (x+1)th, (x+2)th,..., and nth adsorption resin columns for adsorption and separation. In some embodiments, the ion exchange treatment solution sequentially passes through the first, second, ..., and nth (n≥2) adsorption resin columns of the adsorption resin column combination for multistage adsorption separation, wherein the column liquid obtained after passing through each adsorption resin column is not collected but directly loaded into the next adsorption column. When continuous separation is carried out in series, the ingredients separated are sequentially distributed in the resin layer based on the difference of binding forces between moleculars and resin (strongly adsorbed substances flow out later, weakly adsorbed substances flow out first). However, combining materials after collecting between columns causes the sorting of ingredients separated in the front column is disrupted, making it more difficult to separate in the rear column. Therefore, for the above two embodiments, the latter has a better adsorption separation effect than the former. In the method of the present application, after multistage adsorption separation, the sweetening composition of the present application is obtained from each of the xth to nth (2≤x≤n) adsorption resin columns.

In some embodiments, the multistage adsorption separation described in this application is a multistage adsorption separation that passes through two or more, preferably two to six adsorption resin columns. For example, it can be multistage adsorption separation that passes through two, three, four, five, or six adsorption resin columns, and further preferably multistage adsorption separation that passes through two, three, or four adsorption resin columns. In the present application, the model of resin of each adsorption resin column is the same or different, and the amount of resin in each adsorption resin column is the same or different.

In some embodiments, in the step of multistage adsorption separation, the mass of Mogroside V in the ion exchange treatment solution passing through the first, ..., and (x-1)th (2≤x≤n) adsorption resin column is 1-4 times, preferably 1-3 times, more preferably 1.5-3 times of the sum of the saturated adsorption mass of the first to (x-1)th adsorption resin columns for Mogroside V, for example, 1 time, 1.1 times, 1.2 times, 1.3 times, 1.4, times 1.5 times, 1.6 times, 1.7 times, 1.8 times, 1.9 times, 2 times, 2.1 times, 2.2 times, 2.3 times, 2.4 times, 2.5 times, 2.6 times, 2.7 times, 2.8 times, 2.9 times, 3 times, 3.1 times, 3.2 times, 3.3 times, 3.4 times, 3.5 times, 3.6 times, 3.7 times, 3.8 times, 3.9 times or 4 times, etc., preferably 1-3 times, more preferably 1.5 to 3 times. The multiple is relative to the volume of the resin in the column that cannot obtain high purity. A too big multiple means that there are many strongly adsorbed impurities (weakly polar substances, Mogroside II, and Mogroside III, etc.) that exceed the adsorption and interception capacity of the resin of the (x-1)th column and are pushed to the xth column, increasing the impurities in the xth column and affecting the purity or taste of the purified sweet glycoside. A too small load amount leads to a too low utilization rate of resin in the (x-1)th column, and too little sweet glycosides running through the xth to nth columns. Although products with higher purity can be obtained, the yield is too low and the economic benefit is quite poor.

In some embodiments, the method further comprises a step of mogroside enrichment through the adsorption resin column A" after the step of clarification and before the step of ion-exchange treatment. In some embodiments, the step of mogroside enrichment comprises: adsorbing the clarified liquid with macroporous adsorption resin to enrich mogroside, eluting with ethanol to obtain mogroside eluent, concentrating and separating the ethanol to obtain concentrated solution of mogroside, and diluting and filtering to obtain filtered clear solution for subsequent ion exchange treatment.

In some embodiments, in the step of enrichment, the adsorption resin column A" is a macroporous adsorption resin column with polyethylene divinylbenzene as the skeleton material; the particle size of the resin is 250-1250µm.

In some embodiments, in the step of enrichment, the models of the resin of the adsorption resin column A" include but are not limited to commonly used macroporous adsorption resins such as LX-15, D101, AB-8, SP700, XD16N and XD1600N, preferably SP700.

In some embodiments, each adsorption resin column used in the step of multistage adsorption separation is weakly polar macroporous adsorption resin column; each adsorption resin column is preferably a macroporous adsorption resin column with skeleton material of polyethylene divinylbenzene; the models of resin for each adsorption resin column include but are not limited to commonly used macroporous adsorption resins such as LX-15, D101, AB-8, SP700, XD16N and XD1600N, preferably SP700.

In some embodiments, based on the total weight of the sweetening composition, the sweetening composition may comprise, for example, 70%, 70.5%, 71%, 71.5%, 72%, 72.5%, 73%, 73.5%, 74%, 74.5%, 75%, 75.5%, 76%, 76.5%, 77%, 77.5%, 78%, 78.5%, 79%, 79.5%, 80%, 80.5%, 81%, 81.5%, 82%, 82.5%, 83%, 83.5%, 84%, 84.5%, 85% or any range therebetween of Mogroside V.

In some embodiments, the sweetening composition may comprise, for example, 5%, 5.2%, 5.5%, 5.8%, 6%, 6.2%, 6.5%, 6.7%, 7%, 7.3%, 7.5%, 7.7%, 8%, 8.2%, 8.5%, 8.8%, 9%, 9.2%, 9.5%, 9.8%, 10%, 10.3%, 10.5%, 10.8%, 11%, 11.2%, 11.5%, 11.7%, 12% or any range therebetween of 11-O-Mogroside V based on the total weight of the sweetening composition.

In some embodiments, the sweetening composition may comprise, for example, 0%, 0.01%, 0.02%, 0.03%, 0.04%, 0.05%, 0.06%, 0.07%, 0.08%, 0.09%, 0.1%, 0.11%, 0.12%, 0.13%, 0.14%, 0.15%, 0.16%, 0.17%, 0.18%, 0.19%, 0.2%, 0.21%, 0.22%, 0.23%, 0.24%, 0.25%, 0.26%, 0.27%, 0.28%, 0.29%, 0.3%, 0.31%, 0.32%, 0.33%, 0.34%, 0.35%, 0.36%, 0.37%, 0.38%, 0.39%, 0.4%, 0.41%, 0.42%, 0.43%, 0.44%, 0.45%, 0.46%, 0.47%, 0.48%, 0.49%, 0.5% or any range therebetween of Siamenoside I based on the total weight of the sweetening composition.

In some embodiments, the total weight of Mogroside II and Mogroside III comprised in the sweetening composition may be, for example, 0%, 0.001%, 0.005%, 0.01%, 0.02%, 0.03%, 0.04%, 0.05%, or any range therebetween of the total weight of the sweetening composition.

In some embodiments, the sweetening composition may comprise, for example, 0%, 0.01%, 0.05%, 0.1%, 0.15%, 0.2%, 0.25%, 0.3%, 0.35%, 0.4%, 0.45%, 0.5% or any range therebetween of protein, based on the total weight of the sweetening composition.

In some embodiments, the sweetening composition may comprise, for example, 0%, 0.01%, 0.05%, 0.1%, 0.15%, 0.2%, 0.25%, 0.3%, 0.35%, 0.4%, 0.45%, 0.5% or any range therebetween of total carbohydrate based on the total weight of the sweetening composition.

In some embodiments, in the step of multistage adsorption separation, after the ion exchange treatment solution is loaded, the adsorption resin column combination is first eluted with water or 10-30% ethanol, and then eluted with any one or more solvents selected from the group consisting of: methanol, ethanol, propanol and acetone.

In some embodiments, in the step of multistage adsorption separation, after the ion exchange treatment liquid is loaded, the adsorption resin column combination is first eluted with 30% ethanol, and then eluted with ethanol with concentration of 55% or more.

The sweetening composition described in this application can be used in food, beverage, medicine, or dietary supplement products.

### EXAMPLES

This application provides a general and/or specific description of the materials and testing methods used in the experiments. In the following examples, the materials or instruments used without indicating the manufacturer are all conventional materials or instruments that can be obtained from the market.

### Example 1

300kg of fresh fruits of Luo Han Guo were crushed into small granules by a crusher, then put into a countercurrent extraction device, added with 1000L of hot water at 90°C for extraction, then the extraction solution was treated by a juice extruder, centrifuged, and then clarified by ultrafiltration with ceramic membrane (pore diameter 200nm) to obtain ultrafiltration clear solution a.

The ultrafiltration clear solution was loaded into a chromatography column (diameter 30cm * column height 90cm) filled with 50L of macroporous resin (model SP700, particle size 250µm, specific surface area 1200m²/g) to treat and absorb mogroside; the column was washed with 200L of purified water, then eluted with 150L of 60% ethanol; the ethanol eluent was collected for vacuum concentration to obtain concentrated solution b comprising the sweet glycoside except ethanol, with a net weight of 13.8kg a solid content of 30%, and a Mogroside V content of 26.5% in the dry matter of the concentrated solution.

The concentrated solution was diluted with purified water to a solid content of 5%, to be subjected to ion exchange treatment.

The ion exchange resin columns consist of a strongly acidic cation exchange resin column and a weakly basic anion exchange resin column in series, wherein the model of the resin of the strongly acidic cation exchange is DOWEX Marathon MSC, with a particle size of 550-900µm, and the model of the resin of the weakly basic anion exchange is DOWEX Marathon WBA, with a particle size of 475-575µm, and the resin amount of each column is 15L. The diluent of the concentrated solution was successively loaded into the cation exchange resin column and anion exchange resin column, and the columns were washed with purified water after the material was loaded; then the mixed deionized solution c was obtained by combining the column flow and the washing solution flowing through the ion exchange resin, with a solid content of 2.8%, a volume of 65.9L, and a Mogroside V content of 59.6% in the dry matter of the solution, which is to be subjected to multistage adsorption separation and purification.

The multistage adsorption separation column group consists of 3 resin columns each filled with 6L of macroporous adsorption resin (SP700), numbered A, B, and C, all of which were regenerated and washed with water for later use.

The deionized solution c was made to sequentially pass through the macroporous adsorption resin columns A, B and C at a flow rate of 3L/h; after loading, the total mass of Mogroside V in the ion exchange treatment solution passing through column A was 2.6 times of the saturated adsorption mass of the corresponding resin for Mogroside V; each column was washed with 12L of purified water, then column A was directly eluted with 60% ethanol, and columns B and C were eluted with 12L of 25% ethanol and then eluted with 60% ethanol, respectively; then the eluents were collected, concentrated and dried respectively, and the contents of Mogroside V and other glycosides were detected. The results are shown in Table 1.

**Table 1**

| No. of Column | Eluent | Net weight of Mogroside V(%) | Net weight of product (kg) | Content (%, dry matter) | | | | | | | | flavor |
|---|---|---|---|---|---|---|---|---|---|---|---|---|
| | | | | 11-O-Mogroside V | Mogroside V | Siamenoside I | Mogroside IV | Mogroside III | Mogroside II | Proteins | Total carbohydrates | |
| A | 60% ethanol eluent | 23.0% | 0.65 | 6.33 | 37.1 | 2.66 | 1.44 | 0.68 | 0.09 | 0 | 0 | Sweet in mouth at first, with a noticeable bitterness afterwards. |
| B | 25% ethanol eluent | 10.2% | 0.18 | 7.51 | 58.5 | 1.55 | 0.43 | 0 | 0 | 0 | 0 | Pure and long-lasting sweetness |
| B | 60% eluent ethanol | 24.0% | 0.35 | 10.06 | 72.3 | 0 | 0 | 0 | 0 | 0 | 0 | pure and full sweetness |
| C | 25% ethanol eluent | 10.6% | 0.19 | 7.47 | 12.0 | 0 | 0 | 0 | 0 | 0 | 0 | - |
| C | 60% ethanol eluent | 32.2% | 0.42 | 8.38 | 81.6 | 0 | 0 | 0 | 0 | 0 | 0 | pure and full sweetness |

| | | | | | | | | | | | | |
|---|---|---|---|---|---|---|---|---|---|---|---|---|
| Note: the net weight and content of substances in each eluent were calculated based on the dry matter, and the same below. | | | | | | | | | | | | |

### Example 2

356kg of fresh fruits of Luo Han Guo were crushed into small granules by a crusher, then put into a countercurrent extraction device, added with 1000L of hot water at 90°C for extraction, then the extraction solution was treated by a juice extruder, centrifuged, and then clarified by ultrafiltration with ceramic membrane (pore diameter 200nm) to obtain 1200L of ultrafiltration clear solution a, to be subjected to ion exchange treatment.

The ion exchange resin columns consist of a strongly acidic cation exchange resin column and a weakly basic anion exchange resin column in series, and the resin amount of each column is 120L. The ultrafiltration clear solution a was successively loaded into the cation exchange resin column and anion exchange resin column; the model of the resin of the strongly acidic cation exchange is DOWEX Marathon MSC, with a particle size of 550-900µm; and the model of the resin of the weakly basic anion exchange is DOWEX Marathon WBA, with a particle size of 475-575µm; the columns were washed with purified water after the material was loaded; then the mixed deionized solution c was obtained by combining the column flow and the washing solution flowing through the ion exchange resin, with a solid content of 1.92%, a volume of 1300L, and a Mogroside V content of 5.4% in the dry matter of the solution, which is to be subjected to multistage adsorption separation and purification.

The multistage adsorption separation column group consists of 4 resin columns each filled with 5L of macroporous adsorption resin (SP700,with a particle size of 250µm and a specific surface area of 1200m²/g), numbered A, B, C and D, all of which were regenerated and washed with water for later use.

The deionized solution c was made to sequentially pass through the macroporous adsorption resin columns A, B, C and D at a flow rate of 4L/h; after loading, the total mass of Mogroside V in the ion exchange treatment solution passing through columns A and B was 2 times of the saturated adsorption mass of the corresponding resins for Mogroside V; each column was washed with 12.5L of purified water, then column A was directly eluted with 60% ethanol, and columns B, C and D were eluted with 12L of 25% ethanol and then eluted with 10L of 60% ethanol, respectively; then the eluents were collected, concentrated and dried respectively, and the contents of Mogroside V and other glycosides were detected. The results are shown in Table 2.

**Table 2**

| No. of Column | Eluent | Net weight of Mogroside V (%) | Net weight of product (kg) | Content (%, dry matter) | | | | | | | flavor |
|---|---|---|---|---|---|---|---|---|---|---|---|
| | | | | 11-O-Mogroside V | Mogroside V | Siamenoside I | Mogroside IV | Mogroside III | Mogroside II | proteins | |
| A | 60% ethanol eluent | 19.2% | 0.663 | 5.10 | 40.2 | 2.67 | 1.32 | 0.57 | 0.08 | 0 | Sweet in mouth at first, with a noticeable bitterness afterwards. |
| B | 25% ethanol eluent | 3.9% | 0.17 | 7.33 | 33.0 | 1.55 | 0.39 | 0 | 0 | 0 | - |
| B | 60% ethanol eluent | 22.9% | 0.49 | 10.60 | 68.0 | 1.89 | 0.11 | 0 | 0 | 0 | Pure, full and slightly long-lasting sweetness |
| C | 25% ethanol eluent | 4.1% | 0.18 | 6.35 | 35.0 | 0 | 0 | 0 | 0 | 0 | - |
| C | 60% ethanol eluent | 23.8% | 0.45 | 10.26 | 76.2 | 0 | 0 | 0 | 0 | 0 | pure and full sweetness |
| D | 25% ethanol eluent | 3.2% | 0.18 | 2.62 | 26.0 | 0 | 0 | 0 | 0 | 0 | - |
| D | 60% ethanol eluent | 19.8% | 0.34 | 5.60 | 83.9 | 0 | 0 | 0 | 0 | 0 | pure and full sweetness |

### Example 3

370kg of fresh fruits of Luo Han Guo were crushed into small granules by a crusher, then put into a countercurrent extraction device, added with 1000L of hot water at 90°C for extraction, then the extraction solution was treated by a juice extruder, centrifuged, and then clarified by ultrafiltration with ceramic membrane (pore diameter 200nm) to obtain ultrafiltration clear solution a, to be subjected to ion exchange treatment.

The ion exchange resin columns consist of a strongly acidic cation exchange resin column and a weakly basic anion exchange resin column in series, and the resin amount of each column is 130L, wherein the model of the resin of the strongly acidic cation exchange is AMBERLITE FPC3500, with a particle size of 450-650µm, and the model of the resin of the weakly basic anion exchange is SCAV2, with a particle size of 600-800µm. The ultrafiltration clear solution a was successively loaded into the cation exchange resin column and anion exchange resin column, and the columns were washed with purified water after the material was loaded; then the mixed deionized solution c was obtained by combining the column flow and the washing solution flowing through the ion exchange resin, with a solid content of 1.7%, a volume of 1200L, and a Mogroside V content of 5.5% in the dry matter, which is to be subjected to multistage adsorption separation and purification.

The multistage adsorption separation column group consists of 3 resin columns each filled with 8L of macroporous adsorption resin (XAD16N, with a particle size of 560-710µm and a specific surface area of 800m²/g). After pretesting, it was found that the saturated adsorption capacity of XAD16N for mogrosides was 6.3g/100ml.

The columns were numbered successively as A, B and C, all of which were regenerated and washed with purified water for later use.

The deionized solution c was made to sequentially pass through the macroporous adsorption resin columns A, B and C at a flow rate of 2.4L/h; after loading, the total mass of Mogroside V in the ion exchange treatment solution passing through column A was 3 times of the saturated adsorption mass of the corresponding resin for Mogroside V; each column was washed with 2.5BV of purified water; then each column was eluted with 16L of 25% ethanol and then eluted with 16L of 60% ethanol; then the eluents were collected, concentrated and dried respectively, and the contents of Mogroside V and other glycosides were detected. The results are shown in Table 3.

**Table 3**

| No. of Column | Eluent | Net weight of Mogroside V (%) | Net weight of product (kg) | Content (%, dry matter) | | | | | | | | flavor |
|---|---|---|---|---|---|---|---|---|---|---|---|---|
| | | | | 11-O-Mogroside V | Mogroside V | Siamenoside I | Mogroside IV | Mogroside III | Mogroside II | Proteins | total carbohydrates | |
| A | 25% ethanol eluent | 5.33% | 0.185 | 7.57 | 43.6 | 1.59 | 0.44 | 0 | 0 | 0 | 0 | - |
| A | 60% ethanol eluent | 30.47% | 0.739 | 5.69 | 62.37 | 2.70 | 1.49 | 0.67 | 0.11 | 0 | 0 | Sweet in mouth at first, with a noticeable bitterness afterwards |
| B | 25% ethanol eluent | 3.87% | 0.191 | 6.81 | 30.72 | 1.47 | 0.65 | 0 | 0 | 0 | 53.3 | - |
| B | 60% ethanol eluent | 37.34% | 0.750 | 10.10 | 75.24 | 0 | 0 | 0 | 0 | 0 | 0 | pure sweetness |
| C | 25% ethanol eluent | 3.33% | 0.42 | 4.92 | 16.89 | 0 | 0 | 0 | 0 | 0 | 81.1 | - |
| C | 60% ethanol eluent | 16.89% | 0.33 | 8.26 | 77.37 | 0 | 0 | 0 | 0 | 0 | 0 | pure sweetness |

### Example 4

264kg of fresh fruits of Luo Han Guo were crushed into small granules by a crusher, then put into a countercurrent extraction device, added with 900L of hot water at 85°C for extraction, then the extraction solution was treated by a juice extruder, centrifuged, and then clarified by ultrafiltration with ceramic membrane (pore diameter 200nm) to obtain ultrafiltration clear solution a.

The ion exchange resin columns consist of a strongly acidic cation exchange resin column and a weakly basic anion exchange resin column in series, and the resin amount of each column is 92L, wherein the model of the resin of the strongly acidic cation exchange is AMBERLITE FPC3500, with a particle size of 450-650µm, and the model of the resin of the weakly basic anion exchange is SCAV2, with a particle size of 600-800µm. The ultrafiltration clear solution a was successively loaded into the cation exchange resin column and anion exchange resin column, and the columns were washed with purified water after the material was loaded; then the mixed deionized solution c was obtained by combining the column flow and the washing solution flowing through the ion exchange resin, with a solid content of 1.8%, a volume of 13L, and a Mogroside V content of 5.5% in the dry matter, which is to be subjected to multistage adsorption separation and purification.

The multistage adsorption separation column group consists of 2 resin columns filled with 6L and 10L macroporous adsorption resin (XAD1600N, with a particle size of 350-450µm and a specific surface area of 800m²/g) respectively, numbered A and B, both of which were regenerated and washed with water for later use.

The deionized solution c was made to sequentially pass through the macroporous adsorption resin columns A and B at a flow rate of 1.8L/h; after loading, the total mass of Mogroside V in the ion exchange treatment solution passing through column A was 2.7 times of the saturated adsorption mass of the corresponding resin for Mogroside V; each column was washed with 3BV of purified water, then eluted with 2BV of 25% ethanol and 2BV of 60% ethanol successively, then the eluents were collected, concentrated and dried respectively, and then the contents of Mogroside V and other glycosides were detected. The results are shown in Table 4.

**Table 4**

| No. of Column | Eluent | Net weight of Mogroside V (%) | Net weight of product (kg) | Content (%, dry matter) | | | | | | | | flavor |
|---|---|---|---|---|---|---|---|---|---|---|---|---|
| | | | | 11-O-Mogroside V | Mogroside V | Siamenoside I | Mogroside IV | Mogroside III | Mogroside II | Proteins | total carbohydrates | |
| A | 25% ethanol eluent | 5.03% | 0.142 | 6.89 | 36.93 | 1.43 | 0.47 | 0 | 0 | 0 | 23.6 | - |
| A | 60% ethanol eluent | 27.52 % | 0.566 | 10.80 | 50.57 | 2.56 | 1.63 | 0.72 | 0.10 | 0 | 0 | Sweet in mouth at first, with a noticeable bitterness afterwards |
| B | 25% ethanol eluent | 5.75% | 0.223 | 7.23 | 26.77 | 1.20 | 0.12 | 0 | 0 | 0 | 63.2 | pure and full sweetness |
| B | 60% ethanol eluent | 64.36 % | 0.898 | 8.21 | 74.54 | 0 | 0 | 0 | 0 | 0 | 0 | pure sweetness |

### Example 5

300kg of fresh fruits of Luo Han Guo were crushed into small granules by a crusher, then put into a countercurrent extraction device, added with 1000L of hot water at 90°C for extraction, then the extraction solution was treated by a juice extruder, centrifuged, and then clarified by ultrafiltration with ceramic membrane (pore diameter 200nm) to obtain ultrafiltration clear solution a.

The ultrafiltration clear solution was loaded into a chromatography column (diameter 30cm * column height 90cm) filled with 45L of macroporous resin (model LX-15, particle size 315-1250µm, specific surface area 750m²/g) for treatment and adsorption of mogrosides; then the column was washed with 200L of purified water, and then eluted with 150L of 60% ethanol, collecting the ethanol eluent for vacuum concentration to obtain concentrated solution b comprising sweet glycosides with ethanol removed, with a net weight of 13.6kg, a solid content of 35%, and a Mogroside V content of 25.8% in the dry matter of the concentrated solution.

The concentrated solution was diluted with purified water to a solid content of 5%, to be subjected to ion exchange treatment.

The ion exchange resin columns consist of a strongly acidic cation exchange resin column and a weakly basic anion exchange resin column in series, wherein the model of the resin of the strongly acidic cation exchange is DOWEX Marathon MSC, with a particle size of 550-900µm, and the model of the resin of the weakly basic anion exchange is SCAV2, with a particle size of 600-800µm, and the resin amount of each column is 5.5L. The diluent of the concentrated solution was successively loaded into the cation exchange resin column and anion exchange resin column, and the columns were washed with purified water after the material was loaded; then the mixed deionized solution c was obtained by combining the column flow and the washing solution flowing through the ion exchange resin, with a solid content of 3.0%, a volume of 63.5L, and a Mogroside V content of 58% in the dry matter of the solution, which is to be subjected to multistage adsorption separation and purification.

The multistage adsorption separation column group consists of 5 resin columns numbered A, B, C, D and E successively, wherein column A is filled with 5.5L of SP700 resin, column B is filled with 4.5L of XAD1600N resin, columns C, D and E are all filled with 2.25L of XAD1600N resin. All the columns were regenerated with 5% sodium hydroxide solution and washed with water for later use.

The deionized solution c was made to sequentially pass through the macroporous adsorption resin columns A, B, C, D and E at a flow rate of 1.2L/h; after loading, the total mass of Mogroside V in the ion exchange treatment solution passing through columns A and B was 1.7 times of the saturated adsorption mass of the corresponding resins for Mogroside V; each column was washed with 2BV of purified water, then columns A and B were directly eluted with 60% ethanol, and columns C, D and E were eluted with 5L of 25% ethanol and then eluted with 5L of 60% ethanol, respectively; then the eluents were collected, concentrated and dried respectively, and the contents of Mogroside V and other glycosides were detected. The results are shown in Table 5.

**Table 5**

| No. of Column | Eluent | Net weight of Mogroside V (%) | Net weight of product (kg) | Content (%, dry matter) | | | | | | | | flavor |
|---|---|---|---|---|---|---|---|---|---|---|---|---|
| | | | | 11-O -Mogroside V | Mogroside V | Siamenoside I | Mogroside IV | Mogroside III | Mogroside II | Proteins | total carbohydrates | |
| A | 60% ethanol | 26.80 % | 0.707 | 5.27 % | 44.42 % | 2.79 | 1.40 | 0.63 | 0.07 | 0 | 0 | Sweet in mouth at first, with a noticeable bitterness afterwards |
| B | 60% ethanol eluent | 32.93 % | 0.577 | 10.23 | 66.87 % | 1.89 | 0.11 | 0 | 0 | 0 | 0 | pure and long-lasting sweetness |
| C | 25% ethanol eluent | 2.96% | 0.054 | 8.54 | 63.62 % | 0 | 0 | 0 | 0 | 0 | 0 | - |
| C | 60% ethanol eluent | 14.53 % | 0.214 | 10.02 | 79.46 % | 0 | 0 | 0 | 0 | 0 | 0 | pure sweetness |
| D | 25% ethanol eluent | 3.76% | 0.055 | 6.61 | 65.2 % | 0 | 0 | 0 | 0 | 0 | 0 | - |
| D | 60% ethanol eluent | 15.06 % | 0.215 | 8.26 | 82.3 % | 0 | 0 | 0 | 0 | 0 | 0 | pure sweetness |
| E | 25% ethanol eluent | 2.15% | 0.053 | 2.62 | 47.83 % | 0 | 0 | 0 | 0 | 0 | 0 | - |
| E | 60% ethanol eluent | 15.02% | 0.212 | 5.03 | 83.1% | 0 | 0 | 0 | 0 | 0 | 0 | pure sweetness |

### Example 6

300kg of fresh fruits of Luo Han Guo were crushed into small granules by a crusher, then put into a countercurrent extraction device, added with 1000L of hot water at 90°C for extraction, then the extraction solution was treated by a juice extruder, centrifuged, and then clarified by ultrafiltration with ceramic membrane (pore diameter 200nm) to obtain ultrafiltration clear solution a.

The ion exchange resin columns consist of a strongly acidic cation exchange resin column and a weakly basic anion exchange resin column in series, and the resin amount of each column is 115L, wherein the model of the resin of the strongly acidic cation exchange is DOWEX Marathon MSC, with a particle size of 450-650µm, and the model of the resin of the weakly basic anion exchange is SCAV2, with a particle size of 600-800µm. The solution a was successively loaded into the cation exchange resin column and anion exchange resin column, and the columns were washed with purified water after the material was loaded; then the mixed deionized solution c was obtained by combining the column flow and the washing solution flowing through the ion exchange resin, with a solid content of 2.1%, a volume of 1212L, and a Mogroside V content of 5.5% in the dry matter of the solution, which is to be subjected to multistage adsorption separation and purification.

The multistage adsorption separation column group consists of 4 resin columns each filled with 5L of macroporous resin (SP700) respectively, numbered A, B, C and D successively, all of which were regenerated and washed with water for later use.

The deionized solution c was made to sequentially pass through the macroporous adsorption resin columns A, B, C and D at a flow rate of 4L/h; after loading, the total mass of Mogroside V in the ion exchange treatment solution passing through columns A and B was 2 times of the saturated adsorption mass of the corresponding resins for Mogroside V; each column was washed with 12.5L purified water, then column A was directly eluted with 60% ethanol, and columns B, C and D were first eluted with 2BV of 25% ethanol and then eluted with 10L of 60% ethanol respectively, and the eluents were collected, concentrated and dried respectively, and the contents of Mogroside V, other glycosides, total carbohydrates and proteins were detected. The results are shown in Table 6.

**Table 6**

| No. of Column | Eluent | Net weight of Mogroside V (%) | Net weight of product (kg) | Content (%, dry matter) | | | | | | | | flavor |
|---|---|---|---|---|---|---|---|---|---|---|---|---|
| | | | | 11-O-Mogroside V | Mogroside V | Siamenoside I | Mogroside IV | Mogroside III | Mogroside II | Proteins | total carbohydrates | |
| A | 60% ethanol eluent | 18.9 % | 0.677 | 5.62 | 41.42 | 3.23 | 1.40 | 0.66 | 0.1 | 0 | 0 | Sweet in mouth at first, with a noticeable bitterness afterwards |
| B | 25% ethanol eluent | 3.5% | 0.170 | 7.17 | 31.10 | 1.71 | 0.40 | 0 | 0 | 0 | 0 | pure and long-lasting sweetness |
| B | 60% ethanol eluent | 21.3 % | 0.470 | 11.20 | 67.3 | 0 | 0 | 0 | 0 | 0 | 0 | pure sweetness |
| C | 25% ethanol eluent | 3.7% | 0.162 | 6.15 | 34.0 | 0 | 0 | 0 | 0 | 0 | 0 | - |
| C | 60% ethanol eluent | 24.6 % | 0.465 | 11.35 | 78.56 | 0 | 0 | 0 | 0 | 0 | 0 | pure sweetness |
| D | 25% ethanol eluent | 3.6% | 0.220 | 3.15 | 24.8 | 0 | 0 | 0 | 0 | 0 | 0 | - |
| D | 60% ethanol eluent | 22.5 % | 0.390 | 6.33 | 84.7 | 0 | 0 | 0 | 0 | 0 | 0 | pure sweetness |

### Example 7

356kg of fresh fruits of Luo Han Guo were crushed into small granules by a crusher, then put into a countercurrent extraction device, added with 1000L hot water at 90°C for extraction, then the extraction solution was treated by a juice extruder, centrifuged, and then clarified by ultrafiltration with ceramic membrane (pore diameter 200nm) to obtain ultrafiltration clear solution a.

The ion exchange resin columns consist of a strongly acidic cation exchange resin column and a weakly basic anion exchange resin column in series, and each column was filled with 125L of resin; the model of the resin of the strongly acidic cation exchange is AMBERLITE FPC22H, and the model of the resin of the weakly basic anion exchange is DOWEX Marathon WBA. The solution a was successively loaded into the cation exchange resin column and anion exchange resin column, and the columns were washed with purified water after the material was loaded; then the mixed deionized solution c was obtained by combining the column flow and the washing solution flowing through the ion exchange resin, with a solid content of 2.3%, a volume of 1210L, and a Mogroside V content of 5.4% in the dry matter of the solution, which is to be subjected to multistage adsorption separation and purification.

The multistage adsorption separation column group consists of 4 resin columns each filled with 5L of macroporous resin (SP700), numbered A, B, C and D, all of which were regenerated and washed with water for later use.

The deionized solution c was made to sequentially pass through the macroporous adsorption resin columns A, B, C and D at a flow rate of 4L/h; after loading, the total mass of Mogroside V in the ion exchange treatment solution passing through columns A and B was 2 times of the saturated adsorption mass of the corresponding resins for Mogroside V; each column was washed with 12.5L of purified water, then column A was directly eluted with 60% ethanol, and columns B, C and D were first eluted with 2BV of 25% ethanol and then eluted with 10L of 60% ethanol, respectively; the eluents were collected, concentrated and dried respectively, and the contents of Mogroside V, other glycosides, total carbohydrates and proteins were detected. The results are shown in Table 7.

**Table 7**

| No. of Column | Eluent | Net weight of Mogroside V (%) | Net weight of product (kg) | Content (%, dry matter) | | | | | | | | flavor |
|---|---|---|---|---|---|---|---|---|---|---|---|---|
| | | | | 11-O-Mogroside V | Mogroside V | Siamenoside I | Mogroside IV | Mogroside III | Mogroside II | Proteins | total carbohydrates | |
| A | 60% ethanol eluent | 20.6% | 0.689 | 6.45 | 43.2 | 3.21 | 1.85 | 0.78 | 0.16 | 0 | 0 | Sweet in mouth at first, with a noticeable bitterness afterwards |
| B | 25% ethanol eluent | 4.4% | 0.19 | 7.21 | 34.1 | 1.68 | 0.52 | 0 | 0 | 0 | 0 | pure and long-lasting sweetness |
| B | 60% ethanol eluent | 20.1% | 0.454 | 9.85 | 63.8 | 0 | 0 | 0 | 0 | 0 | 0 | pure sweetness |
| C | 25% ethanol eluent | 4.4% | 0.189 | 6.92 | 33.5 | 0 | 0 | 0 | 0 | 0 | 0 | - |
| C | 60% ethanol eluent | 22.5% | 0.444 | 10.50 | 73.32 | 0 | 0 | 0 | 0 | 0 | 0 | pure sweetness |
| D | 25% ethanol eluent | 3.32% | 0.19 | 7.43 | 25.2 | 0 | 0 | 0 | 0 | 0 | 0 | - |
| D | 60% ethanol eluent | 20.90 % | 0.38 | 10.32 | 79.6 | 0 | 0 | 0 | 0 | 0 | 0 | pure sweetness |

### Example 8

360kg of fresh fruits of Luo Han Guo were crushed into small granules by a crusher, then put into a countercurrent extraction device, added with 1000L of hot water at 90°C for extraction, then the extraction solution was treated by a juice extruder, centrifuged, and then clarified by ultrafiltration with ceramic membrane (pore diameter 200nm) to obtain ultrafiltration clear solution a.

The ion exchange resin columns consist of a strongly acidic cation exchange resin column and a weakly basic anion exchange resin column in series, and each column was filled with 126L of resin; the model of the resin of the strongly acidic cation exchange is DOWEX Marathon MSC, and the model of the resin of the weakly basic anion exchange is LX-T5. The solution a was successively loaded into the cation exchange resin column and anion exchange resin column, and the columns were washed with purified water after the material was loaded; then the mixed deionized solution c was obtained by combining the column flow and the washing solution flowing through the ion exchange resin, with a solid content of 2.1%, a volume of 1370L, and a Mogroside V content of 5.3% in the dry matter of the solution, which is to be subjected to multistage adsorption separation and purification.

The multistage adsorption separation column group consists of 4 resin columns each filled with 5L macroporous resin (SP700), numbered A, B, C and D, all of which were regenerated and washed with water for later use.

The deionized solution c was made to sequentially pass through the macroporous adsorption resin columns A, B, C and D at a flow rate of 4L/h; after loading, the total mass of Mogroside V in the ion exchange treatment solution passing through columns A and B was 2 times of the saturated adsorption mass of the corresponding resins for Mogroside V; each column was washed with 12.5L of purified water, then column A was directly eluted with 60% ethanol, and columns B, C and D were first eluted with 2BV of 25% ethanol and then eluted with 10L of 60% ethanol, respectively; the eluents were collected, concentrated and dried respectively, and the contents of Mogroside V, other glycosides, total carbohydrates and proteins were detected. The results are shown in Table 8.

**Table 8**

| No. of Column | Eluent | Net weight of Mogroside V (%) | Net weight of product (kg) | Content (%, dry matter) | | | | | | | | flavor |
|---|---|---|---|---|---|---|---|---|---|---|---|---|
| | | | | 11-O-Mogroside V | Mogroside V | Siamenoside I | Mogroside IV | Mogroside III | Mogroside II | Proteins | total carbohydrates | |
| A | 60% ethanol eluent | 20.10% | 0.665 | 6.50 | 45.6 | 3.36 | 1.83 | 0.81 | 0.17 | 0 | 0 | Sweet in mouth at first, with a noticeable bitterness afterwards |
| B | 25% ethanol eluent | 4.12% | 0.190 | 7.21 | 30.0 | 1.68 | 0.52 | 0 | 0 | 0 | 0 | Pure and long-lasting sweetness |
| B | 60% ethanol eluent | 19.7% | 0.433 | 11.07 | 64.1 | 0 | 0 | 0 | 0 | 0 | 0 | pure sweetness |
| C | 25% ethanol eluent | 4.11% | 0.168 | 7.03 | 35.2 | 0 | 0 | 0 | 0 | 0 | 0 | - |
| C | 60% ethanol eluent | 22.60% | 0.448 | 10.85 | 72.6 | 0 | 0 | 0 | 0 | 0 | 0 | pure sweetness |
| D | 25% ethanol eluent | 3.45% | 0.190 | 6.82 | 26.3 | 0 | 0 | 0 | 0 | 0 | 0 | - |
| D | 60% ethanol eluent | 21.40% | 0.383 | 10.55 | 80.4 | 0 | 0 | 0 | 0 | 0 | 0 | pure sweetness |

### Example 9

361kg of fresh fruits of Luo Han Guo were crushed into small granules by a crusher, then put into a countercurrent extraction device, added with 1000L of hot water at 90°C for extraction, then the extraction solution was treated by a juice extruder, centrifuged, and then clarified by ultrafiltration with ceramic membrane (pore diameter 200nm) to obtain ultrafiltration clear solution a.

The ion exchange resin columns consist of a strongly acidic cation exchange resin column and a weakly basic anion exchange resin column in series, and each column was filled with 130L of resin; the model of the resin of the strongly acidic cation exchange is AMBERLITE FPC22H, and the model of the resin of the weakly basic anion exchange is FPA53. The solution a was successively loaded into the cation exchange resin column and anion exchange resin column, and the columns were washed with purified water after the material was loaded; then the mixed deionized solution c was obtained by combining the column flow and the washing solution flowing through the ion exchange resin, with a solid content of 2.2%, a volume of 1238L, and a Mogroside V content of 5.6% in the dry matter of the solution, which is to be subjected to multistage adsorption separation and purification.

The multistage adsorption separation column group consists of 4 resin columns each filled with 5L macroporous resin (SP700), numbered A, B, C and D, all of which were regenerated and washed with water for later use.

The deionized solution c was made to sequentially pass through the macroporous adsorption resin columns A, B, C and D at a flow rate of 4L/h; after loading, the total mass of Mogroside V in the ion exchange treatment solution passing through columns A and B was 2 times of the saturated adsorption mass of the corresponding resins for Mogroside V; each column was washed with 12.5L of purified water, then column A was directly eluted with 60% ethanol, and columns B, C and D were first eluted with 2BV of 25% ethanol and then eluted with 10L of 60% ethanol, respectively; the eluents were collected, concentrated and dried respectively, and the contents of Mogroside V, other glycosides, total carbohydrates and proteins were detected. The results are shown in Table 9.

**Table 9**

| No. of Column | Eluent | Net weight of Mogroside V (%) | Net weight of product (kg) | Content (%, dry matter) | | | | | | | | Flavor |
|---|---|---|---|---|---|---|---|---|---|---|---|---|
| | | | | 11-O-Mo groside V | Mogroside V | Siamenoside I | Mogroside IV | Mogroside III | Mogroside II | Proteins | total carbohydrates | |
| A | 60% ethanol eluent | 19.6% | 0.676 | 6.85 | 42.2 | 3.41 | 1.78 | 0.79 | 0.15 | 0 | 0 | Sweet in mouth at first, with a noticeable bitterness afterwards |
| B | 25% ethanol eluent | 3.80% | 0.171 | 6.66 | 32.1 | 1.73 | 0.52 | 0 | 0 | 0 | 0 | Pure and long-lasting sweetness |
| B | 60% ethanol eluent | 21.30 % | 0.446 | 11.21 | 68.9 | 0 | 0 | 0 | 0 | 0 | 0 | pure sweetness |
| C | 25% ethanol eluent | 3.50% | 0.145 | 7.00 | 34.7 | 0 | 0 | 0 | 0 | 0 | 0 | - |
| C | 60% ethanol eluent | 23.30 % | 0.471 | 11.20 | 71.23 | 0 | 0 | 0 | 0 | 0 | 0 | pure sweetness |
| D | 25% ethanol eluent | 3.20% | 0.139 | 6.87 | 33.1 | 0 | 0 | 0 | 0 | 0 | 0 | - |
| D | 60% ethanol eluent | 22.40 % | 0.424 | 11.55 | 76.20 | 0 | 0 | 0 | 0 | 0 | 0 | pure sweetness |

### Example 10

366kg of fresh fruits of Luo Han Guo were crushed into small granules by a crusher, then put into a countercurrent extraction device, added with 1000L of hot water at 90°C for extraction, then the extraction solution was treated by a juice extruder, centrifuged, and then clarified by ultrafiltration with ceramic membrane (pore diameter 200nm) to obtain ultrafiltration clear solution a.

The ion exchange resin columns consist of a strongly acidic cation exchange resin column and a weakly basic anion exchange resin column in series, and each column was filled with 130L of resin; the model of the resin of the strongly acidic cation exchange is FPC88 UPS Na, and the model of the resin of the weakly basic anion exchange is FPA66 UPS. The solution a was successively loaded into the cation exchange resin column and anion exchange resin column, and the columns were washed with purified water after the material was loaded; then the mixed deionized solution c was obtained by combining the column flow and the washing solution flowing through the ion exchange resin, with a solid content of 2.3%, a volume of 1247L, and a Mogroside V content of 5.4% in the dry matter of the solution, which is to be subjected to multistage adsorption separation and purification.

The multistage adsorption separation column group consists of 4 resin columns each filled with 5L macroporous resin (SP700), numbered A, B, C and D, all of which were regenerated and washed with water for later use.

The deionized solution c was made to sequentially pass through the macroporous adsorption resin columns A, B, C and D at a flow rate of 4L/h; after loading, the total mass of Mogroside V in the ion exchange treatment solution passing through columns A and B was 2 times of the saturated adsorption mass of the corresponding resins for Mogroside V; each column was washed with 12.5L of purified water, then column A was directly eluted with 60% ethanol, and columns B, C and D were first eluted with 2BV of 25% ethanol and then eluted with 10L of 60% ethanol, respectively; the eluents were collected, concentrated and dried respectively, and the contents of Mogroside V, other glycosides, total carbohydrates and proteins were detected. The results are shown in Table 10.

**Table 10**

| No. of Column | Eluent | Net weight of Mogroside V(%) V (%) | Net weight of product (kg) | Content (%, dry matter) | | | | | | | | flavor |
|---|---|---|---|---|---|---|---|---|---|---|---|---|
| | | | | 11-O-Mogroside V | Mogroside V | Siamenoside I | Mogroside IV | Mogroside III | Mogroside II | Proteins | total carbohydrates | |
| A | 60% ethanol eluent | 19.0% | 0.640 | 6.46 | 43.9 | 3.02 | 1.53 | 0.58 | 0.10 | 0 | 0 | Sweet in mouth at first, with a noticeable bitterness afterwards |
| B | 25% ethanol eluent | 3.2% | 0.142 | 7.25 | 33.0 | 1.73 | 0.52 | 0 | 0 | 0 | 0 | Pure and long-lasting sweetness |
| B | 60% ethanol eluent | 22.3% | 0.510 | 10.79 | 64.1 | 0 | 0 | 0 | 0 | 0 | 0 | pure sweetness |
| C | 25% ethanol eluent | 3.96% | 0.202 | 7.03 | 28.7 | 0 | 0 | 0 | 0 | 0 | 0 | - |
| C | 60% ethanol eluent | 22.6% | 0.470 | 11.30 | 70.0 | 0 | 0 | 0 | 0 | 0 | 0 | pure sweetness |
| D | 25% ethanol eluent | 3.68% | 0.180 | 6.86 | 30.1 | 0 | 0 | 0 | 0 | 0 | 0 | - |
| D | 60% ethanol eluent | 22.5% | 0.442 | 9.65 | 75.5 | 0 | 0 | 0 | 0 | 0 | 0 | pure sweetness |

### Example 11

110kg of fresh fruits of Luo Han Guo were crushed into small granules by a crusher, then put into a countercurrent extraction device, added with 300L of hot water at 90°C for extraction, then the extraction solution was treated by a juice extruder, centrifuged, and then clarified by ultrafiltration with ceramic membrane (pore diameter 200nm) to obtain ultrafiltration clear solution a.

The ion exchange resin columns consist of a strongly acidic cation exchange resin column and a weakly basic anion exchange resin column in series, and each column was filled with 39L of resin; the model of the resin of the strongly acidic cation exchange is DOWEX Marathon MSC, and the model of the resin of the weakly basic anion exchange is DOWEX Marathon WBA. The solution a was successively loaded into the cation exchange resin column and anion exchange resin column, and the columns were washed with purified water after the material was loaded; then the mixed deionized solution c was obtained by combining the column flow and the washing solution flowing through the ion exchange resin, with a solid content of 2.3%, a volume of 320L, and a Mogroside V content of 5.7% in the dry matter of the solution, which is to be subjected to multistage adsorption separation and purification.

The multistage adsorption separation column group consists of 2 resin columns each filled with 5L of macroporous resin (SP700), numbered A and B, both of which were regenerated and washed with water for later use.

The deionized solution c was made to sequentially pass through the macroporous adsorption resin columns A and B at a flow rate of 4L/h; after loading, the total mass of Mogroside V in the ion exchange treatment solution passing through column A was 1.2 times of the saturated adsorption mass of the corresponding resin for Mogroside V; each column was washed with 3BV of purified water, then column A was directly eluted with 60% ethanol, column B was first eluted with 2BV of 25% ethanol and then eluted with 2BV of 60% ethanol; the eluents were collected, concentrated and dried respectively, and the contents of Mogroside V, other glycosides, total carbohydrates and proteins were detected. The results are shown in Table 11.

**Table 11**

| No. of Column | Eluent | Net weight of Mogroside V (%) | Net weight of product (kg) | Content (%, dry matter) | | | | | | | | flavor |
|---|---|---|---|---|---|---|---|---|---|---|---|---|
| | | | | 11-O-Mogroside V | Mogroside V | Siamenoside I | Mogroside IV | Mogroside III | Mogroside II | Proteins | total carbohydrates | |
| A | 60% ethanol eluent | 76.64% | 0.45 | 5.81 | 55.02 | 3.26 | 1.61 | 0.79 | 0.11 | 0 | 0 | Sweet in mouth at first, with a noticeable bitterness afterwards |
| B | 25% ethanol eluent | 3.81% | 0.085 | 6.03 | 12.6 | 1.47 | 0.39 | 0 | 0 | 0 | 0 | - |
| B | 60% ethanol eluent | 17.13% | 0.127 | 8.71 | 84.65 | 0 | 0 | 0 | 0 | 0 | 0 | pure sweetness |

### Example 12

135kg of fresh fruits of Luo Han Guo were crushed into small granules by a crusher, then put into a countercurrent extraction device, added with 300L of hot water at 90°C for extraction, then the extraction solution was treated by a juice extruder, centrifuged, and then clarified by ultrafiltration with ceramic membrane (pore diameter 200nm) to obtain ultrafiltration clear solution a.

The ion exchange resin columns consist of a strongly acidic cation exchange resin column and a weakly basic anion exchange resin column in series, and each column was filled with 47L of resin; the model of the resin of the strongly acidic cation exchange is DOWEX Marathon MSC, and the model of the resin of the weakly basic anion exchange is DOWEX Marathon WBA. The solution a was successively loaded into the cation exchange resin column and anion exchange resin column, and the columns were washed with purified water after the material was loaded; then the mixed deionized solution c was obtained by combining the column flow and the washing solution flowing through the ion exchange resin, with a solid content of 2.5%, a volume of 396L, and a Mogroside V content of 5.3% in the dry matter of the solution, which is to be subjected to multistage adsorption separation and purification.

The multistage adsorption separation column group consists of 2 resin columns each filled with 5L of macroporous resin (SP700), numbered A and B, both of which were regenerated and washed with water for later use.

The deionized solution c was made to sequentially pass through the macroporous adsorption resin columns A and B at a flow rate of 4L/h; after loading, the total mass of Mogroside V in the ion exchange treatment solution passing through column A was 1.5 times of the saturated adsorption mass of the corresponding resin for Mogroside V; each column was washed with 3BV of purified water, then column A was directly eluted with 60% ethanol, column B was first eluted with 2BV of 25% ethanol and then eluted with 2BV of 60% ethanol; the eluents were collected, concentrated and dried respectively, and the contents of Mogroside V, other glycosides, total carbohydrates and proteins were detected. The results are shown in Table 12.

**Table 12**

| No. of Column | Eluent | Net weight of Mogroside V (%) | Net weight of product (kg) | Content (%, dry matter) | | | | | | | | flavor |
|---|---|---|---|---|---|---|---|---|---|---|---|---|
| | | | | 11-O-Mogroside V | Mogroside V | Siamenoside I | Mogroside IV | Mogroside III | Mogro side II | Proteins | total carbohydrates | |
| A | 60% ethanol eluent | 56.29% | 0.617 | 5.60 | 47.90 | 3.62 | 1.59 | 0.74 | 0.12 | 0 | 0 | Sweet in mouth at first, with a noticeable bitterness afterwards |
| B | 25% ethanol eluent | 8.73% | 0.261 | 6.12 | 17.56 | 1.56 | 0.44 | 0 | 0 | 0 | 0 | |
| B | 60% ethanol eluent | 32.01% | 0.202 | 9.30 | 83.20 | 0 | 0 | 0 | 0 | 0 | 0 | pure sweetness |

### Example 13

200kg of fresh fruits of Luo Han Guo were crushed into small granules by a crusher, then put into a countercurrent extraction device, added with 600L of hot water at 90°C for extraction, then the extraction solution was treated by a juice extruder, centrifuged, and then clarified by ultrafiltration with ceramic membrane (pore diameter 200nm) to obtain ultrafiltration clear solution a.

The ion exchange resin columns consist of a strongly acidic cation exchange resin column and a weakly basic anion exchange resin column in series, and each column was filled with 70L of resin; the model of the resin for the strongly acidic cation exchange is DOWEX Marathon MSC; and the model of the resin for the weakly basic anion exchange is DOWEX Marathon WBA. The solution a was successively loaded into the cation exchange resin column and anion exchange resin column; and the columns were washed with purified water after the material was loaded; then the mixed deionized solution c was obtained by combining the column flow and the washing solution flowing through the ion exchange resin, with a solid content of 2.5%, a volume of 625L, and a Mogroside V content of 5.3% in the dry matter of the solution, which is to be subjected to multistage adsorption separation and purification.

The multistage adsorption separation column group consists of 3 resin columns each filled with 5L of macroporous resin (SP700), numbered A, B and C, all of which were regenerated and washed with water for later use.

The deionized solution c was made to sequentially pass through the macroporous adsorption resin columns A, B and C at a flow rate of 4L/h; after loading, the total mass of Mogroside V in the ion exchange treatment solution passing through column A was 2.2 times of the saturated adsorption mass of the corresponding resin for Mogroside V; each column was washed with 3BV of purified water, then column A was directly eluted with 60% ethanol, and columns B and C were first eluted with 2BV of 25% ethanol and then eluted with 2BV of 60% ethanol, respectively; the eluents were collected, concentrated and dried respectively, and the contents of Mogroside V, other glycosides, total carbohydrates and proteins were detected. The results are shown in Table 13.

**Table 13**

| No. of Column | Eluent | net weight of Mogroside V | Net weight of product (kg) | Content (%, dry matter) | | | | | | | | flavor |
|---|---|---|---|---|---|---|---|---|---|---|---|---|
| | | | | 11-O-Mogroside V | Mogroside V | Siamenoside I | Mogroside IV | Mogroside III | Mogroside II | Proteins | total carbohydrates | |
| A | 60% ethanol eluent | 35.15 % | 0.598 | 5.60 | 45.30 | 3.62 | 1.64 | 0.77 | 0.16 | 0 | 0 | Sweet in mouth at first, with a noticeable bitterness afterwards |
| B | 25% ethanol eluent | 4.27% | 0.104 | 6.23 | 31.50 | 1.68 | 0.49 | 0 | 0 | 0 | 0 | |
| B | 60% ethanol eluent | 47.45 % | 0.475 | 9.91 | 83.20 | 0 | 0 | 0 | 0 | 0 | 0 | pure sweetness |
| C | 25% ethanol eluent | 1.56% | 0.110 | 2.61 | 10.90 | 0 | 0 | 0 | 0 | 0 | 0 | |
| C | 60% ethanol eluent | 10.62 % | 0.097 | 4.97 | 84.30 | 0 | 0 | 0 | 0 | 0 | 0 | pure sweetness |

### Example 14

270kg of fresh fruits of Luo Han Guo were crushed into small granules by a crusher, then put into a countercurrent extraction device, added with 600L of hot water at 90°C for extraction, then the extraction solution was treated by a juice extruder, centrifuged, and then clarified by ultrafiltration with ceramic membrane (pore diameter 200nm) to obtain ultrafiltration clear solution a.

The ion exchange resin columns consist of a strongly acidic cation exchange resin column and a weakly basic anion exchange resin column in series, and each column was filled with 95L of resin; the model of the resin for the strongly acidic cation exchange is DOWEX Marathon MSC, and the model of the resin for the weakly basic anion exchange is DOWEX Marathon WBA. The solution a was successively loaded into the cation exchange resin column and anion exchange resin column; and the columns were washed with purified water after the material was loaded; then the mixed deionized solution c was obtained by combining the column flow and the washing solution flowing through the ion exchange resin, with a solid content of 2.4%, a volume of 754L, and a Mogroside V content of 5.8% in the dry matter of the solution, which is to be subjected to multistage adsorption separation and purification.

The multistage adsorption separation column group consists of 3 resin columns each filled with 5L of macroporous resin (SP700), numbered A, B and C, all of which were regenerated and washed with water for later use.

The deionized solution c was made to sequentially pass through the macroporous adsorption resin columns A, B and C at a flow rate of 4L/h; after loading, the total mass of Mogroside V in the ion exchange treatment solution passing through column A was 3 times of the saturated adsorption mass of the corresponding resin for Mogroside V. Each column was washed with 3BV of purified water, then column A was directly eluted with 60% ethanol, and columns B and C were first eluted with 2BV of 25% ethanol and then eluted with 2BV of 60% ethanol, respectively; the eluents were collected concentrated and dried respectively, and the contents of Mogroside V, other glycosides, total carbohydrates and proteins were detected. The results are shown in Table 14.

**Table 14**

| No. of Column | Eluent | net weight of Mogroside V | Net weight of product (kg) | Content (%, dry matter) | | | | | | | | flavor |
|---|---|---|---|---|---|---|---|---|---|---|---|---|
| | | | | 11-O-Mogroside V | Mogroside V | Siamenoside I | Mogroside IV | Mogroside III | Mogroside II | Proteins | total carbohydrates | |
| A | 60% ethanol eluent | 26.08 % | 0.634 | 5.67 | 43.20 | 3.65 | 1.60 | 0.78 | 0.16 | 0 | 0 | Sweet in mouth at first, with a noticeable bitterness afterwards |
| B | 25% ethanol eluent | 3.64 % | 0.119 | 6.45 | 32.20 | 1.68 | 0.49 | 0 | 0 | 0 | 0 | |
| B | 60% ethanol eluent | 34.25 % | 0.481 | 9.91 | 74.80 | 0 | 0 | 0 | 0 | 0 | 0 | pure sweetness |
| C | 25% ethanol eluent | 4.31 % | 0.190 | 2.75 | 23.80 | 0 | 0 | 0 | 0 | 0 | 0 | |
| C | 60% ethanol eluent | 23.80 % | 0.380 | 5.28 | 84.30 | 0 | 0 | 0 | 0 | 0 | 0 | pure sweetness |

### Example 15

565kg of fresh fruits of Luo Han Guo were crushed into small granules by a crusher, then put into a countercurrent extraction device, added with 900L of hot water at 90°C for extraction, then the extraction solution was treated by a juice extruder, centrifuged, and then clarified by ultrafiltration with ceramic membrane (pore diameter 200nm) to obtain ultrafiltration clear solution a.

The ion exchange resin columns consist of a strongly acidic cation exchange resin column and a weakly basic anion exchange resin column in series, and each column was filled with 200L of resin; the model of the resin of the strongly acidic cation exchange is DOWEX Marathon MSC, and the model of the resin of the weakly basic anion exchange is DOWEX Marathon WBA. The solution a was successively loaded into the cation exchange resin column and anion exchange resin column; and the columns were washed with purified water after the material was loaded; then the mixed deionized solution c was obtained by combining the column flow and the washing solution flowing through the ion exchange resin, with a solid content of 2.35%, a volume of 1820L, and a Mogroside V content of 5.73% in the dry matter of the solution, which is to be subjected to multistage adsorption separation and purification.

The multistage adsorption separation column group consists of 4 resin columns each filled with 5L of macroporous resin (SP700), numbered A, B, C and D, all of which were regenerated and washed with water for later use.

The deionized solution c was made to sequentially pass through the macroporous adsorption resin columns A, B, C and D at a flow rate of 5L/h; after loading, the total mass of Mogroside V in the ion exchange treatment solution passing through columns A and B was 3.5 times of the saturated adsorption mass of the corresponding resins for Mogroside V; each column was washed with 3BV of purified water, then column A was directly eluted with 60% ethanol, and the other columns were first eluted with 2BV of 25% ethanol and then eluted with 2BV of 60% ethanol, respectively; the eluents were collected, concentrated and dried respectively, and the contents of Mogroside V, other glycosides, total carbohydrates and proteins were detected. The results are shown in Table 15.

**Table 15**

| No. of Colum n | Eluent | net weight of Mogro side V | Net weigh t of produ ct (kg) | Content (%, dry matter) | | | | | | | | flavor |
|---|---|---|---|---|---|---|---|---|---|---|---|---|
| | | | | 11-O-Mogros ide V | Mogrosi de V | Siamen oside I | Mogro side IV | Mogro side III | Mogro side II | Proteins | total carboh ydrates | |
| A | 60% ethanol eluent | 9.87% | 0.662 | 5.87 | 36.53 | 4.85 | 1.93 | 1.04 | 0.23 | 0 | 0 | Sweet in mouth at first, with a noticeable bitterness afterwards |
| B | 25% ethanol eluent | 1.74% | 0.135 | 8.72 | 31.60 | 1.18 | 0.09 | 0 | 0 | 0 | 0 | |
| B | 60% ethanol eluent | 12.54 % | 0.464 | 10.05 | 66.23 | 1.89 | 0.17 | 0 | 0 | 0 | 0 | pure sweetness |
| C | 25% ethanol eluent | 2.33% | 0.158 | 2.82 | 35.61 | 0 | 0 | 0 | 0 | 0 | 0 | |
| C | 60% ethanol eluent | 12.31 % | 0.430 | 10.83 | 70.21 | 0 | 0 | 0 | 0 | 0 | 0 | pure sweetness |
| D | 25% ethanol eluent | 2.31% | 0.155 | 7.03 | 36.54 | 0 | 0 | 0 | 0 | 0 | 0 | |
| D | 60% ethanol eluent | 12.12 % | 0.383 | 10.43 | 77.62 | 0 | 0 | 0 | 0 | 0 | 0 | pure sweetness |

### Example 16

282kg of fresh fruits of Luo Han Guo were crushed into small granules by a crusher, then put into a countercurrent extraction device, added with 1000L of hot water at 90°C for extraction, then the extraction solution was treated by a juice extruder, centrifuged, and then clarified by ultrafiltration with ceramic membrane (pore diameter 200nm) to obtain ultrafiltration clear solution a.

The ion exchange resin columns consist of a strongly acidic cation exchange resin column and a weakly basic anion exchange resin column in series, and each column was filled with 100L of resin; the model of the resin for the strongly acidic cation exchange is DOWEX Marathon MSC, and the model of the resin for the weakly basic anion exchange is DOWEX Marathon WBA. The solution a was successively loaded into the cation exchange resin column and anion exchange resin column; and the columns were washed with purified water after the material was loaded; then the mixed deionized solution c was obtained by combining the column flow and the washing solution flowing through the ion exchange resin, with a solid content of 2.1%, a volume of 918L, and a Mogroside V content of 5.5% in the dry matter of the solution, which is to be subjected to multistage adsorption separation and purification.

The multistage adsorption separation column group consists of 4 resin columns each filled with 5L of macroporous resin (model: AB-8), numbered A, B, C and D, all of which were regenerated and washed with water for later use.

The deionized solution c was made to sequentially pass through the macroporous adsorption resin columns A, B, C and D at a flow rate of 4L/h; after loading, the total mass of Mogroside V in the ion exchange treatment solution passing through columns A and B was 2 times of the saturated adsorption mass of the corresponding resins for Mogroside V; each column was washed with 12.5L of purified water, then column A was directly eluted with 60% ethanol, and columns B, C and D were first eluted with 2BV of 25% ethanol and then eluted with 10L of 60% ethanol, respectively; the eluents were collected, concentrated and dried respectively, and the contents of Mogroside V, other glycosides, total carbohydrates and proteins were detected. The results are shown in Table 16.

**Table 16**

| No. of Colu mn | Eluent | Net weigh t of Mogr oside V (%) | Net weigh t of produ ct (kg) | Content (%, dry matter) | | | | | | | | flavor |
|---|---|---|---|---|---|---|---|---|---|---|---|---|
| | | | | 11-O-M ogroside V | Mogros ide V | Siameno side I | Mogros ide IV | Mogro side III | Mogro side II | Protei ns | total carbohy drates | |
| A | 60% ethanol eluent | 18.85 % | 0.534 | 6.08 | 38.82 | 2.69 | 1.41 | 0.58 | 0.11 | 0 | 0 | Sweet in mouth at first, with a noticeable bitterness afterwards |
| B | 25% ethanol eluent | 3.24% | 0.104 | 7.25 | 34.30 | 1.73 | 0.52 | 0 | 0 | 0 | 0 | pure and long-lasting sweetness |
| B | 60% ethanol eluent | 23.6% | 0.396 | 10.79 | 65.6 | 0.09 | 0 | 0 | 0 | 0 | 0 | pure sweetness |
| C | 25% ethanol eluent | 4.17% | 0.120 | 7.03 | 28.7 | 0 | 0 | 0 | 0 | 0 | 0 | - |
| C | 60% ethanol eluent | 25.25 % | 0.383 | 11.30 | 72.6 | 0 | 0 | 0 | 0 | 0 | 0 | pure sweetness |
| D | 25% ethanol eluent | 4.12% | 0.180 | 6.86 | 30.1 | 0 | 0 | 0 | 0 | 0 | 0 | - |
| D | 60% ethanol eluent | 18.9% | 0.264 | 9.65 | 74.32 | 0 | 0 | 0 | 0 | 0 | 0 | pure sweetness |

### Example 17

263kg of fresh fruits of Luo Han Guo were crushed into small granules by a crusher, then put into a countercurrent extraction device, added with 1000L of hot water at 90°C for extraction, then the extraction solution was treated by a juice extruder, centrifuged, and then clarified by ultrafiltration with ceramic membrane (pore diameter 200nm) to obtain ultrafiltration clear solution a.

The ion exchange resin columns consist of a strongly acidic cation exchange resin column and a weakly basic anion exchange resin column in series, and each column was filled with 92L of resin; the model of the resin for the strongly acidic cation exchange is DOWEX Marathon MSC, and the model of the resin for the weakly basic anion exchange is DOWEX Marathon WBA. The solution a was successively loaded into the cation exchange resin column and anion exchange resin column; and the columns were washed with purified water after the material was loaded; then the mixed deionized solution c was obtained by combining the column flow and the washing solution flowing through the ion exchange resin, with a solid content of 2.1%, a volume of 866L, and a Mogroside V content of 5.5% in the dry matter of the solution, which is to be subjected to multistage adsorption separation and purification.

The multistage adsorption separation column group consists of 4 resin columns each filled with 5L of macroporous resin (D101), numbered A, B, C and D, all of which were regenerated and washed with water for later use.

The deionized solution c was made to sequentially pass through the macroporous adsorption resin columns A, B, C and D at a flow rate of 4L/h; after loading, the total mass of Mogroside V in the ion exchange treatment solution passing through columns A and B was 2 times of the saturated adsorption mass of the corresponding resins for Mogroside V; each column was washed with 12.5L of purified water, then column A was directly eluted with 60% ethanol, and columns B, C and D were first eluted with 2BV of 25% ethanol and then eluted with 10L of 60% ethanol; the eluents were collected, concentrated and dried respectively, and the contents of Mogroside V, other glycosides, total carbohydrates and proteins were detected. The results are shown in Table 17.

**Table 17**

| No. of Colu mn | Eluent | Net weight of Mogro side V (%) | Net weight of product (kg) | Content (%, dry matter) | | | | | | | | flavor |
|---|---|---|---|---|---|---|---|---|---|---|---|---|
| | | | | 11-O-Mogr oside V | Mogro side V | Siamenos ide I | Mogros ide IV | Mogro side III | Mogroside II | Protei ns | total carbohy drates | |
| A | 60% ethanol eluent | 18.16% | 0.481 | 5.87 | 38.82 | 2.45 | 1.36 | 0.51 | 0.10 | 0 | 0 | Sweet in mouth at first, with a noticeable bitterness afterwards |
| B | 25% ethanol eluent | 3.81% | 0.109 | 6.89 | 35.10 | 1.73 | 0.52 | 0 | 0 | 0 | 0 | Pure and long-lasting sweetness |
| B | 60% ethanol eluent | 23.6% | 0.381 | 10.79 | 64.7 | 0.09 | 0 | 0 | 0 | 0 | 0 | pure sweetness |
| C | 25% ethanol eluent | 4.11% | 0.110 | 7.03 | 28.7 | 0 | 0 | 0 | 0 | 0 | 0 | - |
| C | 60% ethanol eluent | 23.21% | 0.325 | 11.30 | 71.4 | 0 | 0 | 0 | 0 | 0 | 0 | pure sweetness |
| D | 25% ethanol eluent | 3.91% | 0.118 | 6.54 | 31.33 | 0 | 0 | 0 | 0 | 0 | 0 | - |
| D | 60% ethanol eluent | 16.8% | 0.219 | 9.32 | 72.50 | 0 | 0 | 0 | 0 | 0 | 0 | pure sweetness |

### Example 18

360kg of fresh fruits of Luo Han Guo were crushed into small granules by a crusher, then put into a countercurrent extraction device, added with 900L of hot water at 90°C for extraction, then the extraction solution was treated by a juice extruder, centrifuged, and then clarified by ultrafiltration with ceramic membrane (pore diameter 200nm) to obtain ultrafiltration clear solution a.

The ion exchange resin columns consist of a strongly acidic cation exchange resin column and a weakly basic anion exchange resin column in series, and each column was filled with 126L of resin; the model of the resin for the strongly acidic cation exchange is DOWEX Marathon MSC, and the model of the resin for the weakly basic anion exchange is DOWEX Marathon WBA. The solution a was successively loaded into the cation exchange resin column and anion exchange resin column; and the columns were washed with purified water after the material was loaded; then the mixed deionized solution c was obtained by combining the column flow and the washing solution flowing through the ion exchange resin, with a solid content of 2.4%, a volume of 1005L, and a Mogroside V content of 5.8% in the dry matter of the solution, which is to be subjected to multistage adsorption separation and purification.

The multistage adsorption separation column group consists of 5 resin columns each filled with 4L of macroporous resin (SP700), numbered A, B, C, D and E, all of which were regenerated and washed with water for later use.

The deionized solution c was made to sequentially pass through the macroporous adsorption resin columns A, B, C, D and E at a flow rate of 4L/h; after loading, the total mass of Mogroside V in the ion exchange treatment solution passing through columns A and B was 2.5 times of the saturated adsorption mass of the corresponding resins for Mogroside V; each column was washed with 12L of purified water, then column A was directly eluted with 10L 60% ethanol, and columns B, C, D and E were first eluted with 2BV of 25% ethanol and then eluted with 10L of 60% ethanol; the eluents were collected separately, concentrated and dried separately, and the contents of Mogroside V, other glycosides, total carbohydrates and proteins were detected. The results are shown in Table 18.

**Table 18**

| No. of Colum n | Eluent | Net weight of Mogrosi de V (%) | Net weight of product (kg) | Content (%, dry matter) | | | | | | | | flavor |
|---|---|---|---|---|---|---|---|---|---|---|---|---|
| | | | | 11-O-M ogroside V | Mogros ide V | Siamenos ide I | Mogros ide IV | Mogro side III | Mog rosid e II | Pro tein s | total carbohy drates | |
| A | 60% ethanol eluent | 11.21% | 0.479 | 5.82 | 32.78 | 2.65 | 1.56 | 0.62 | 0.18 | 0 | 0 | Sweet in mouth at first, with a noticeable bitterness afterwards |
| B | 25% ethanol eluent | 2.71% | 0.102 | 6.90 | 36.71 | 1.82 | 0.57 | 0 | 0 | 0 | 0 | pure and long-lasting sweetness |
| B | 60% ethanol eluent | 17.68% | 0.373 | 12.21 | 66.37 | 0.18 | 0 | 0 | 0 | 0 | 0 | pure sweetness |
| C | 25% ethanol eluent | 2.84% | 0.106 | 7.61 | 37.40 | 0 | 0 | 0 | 0 | 0 | 0 | - |
| C | 60% ethanol eluent | 19.98% | 0.368 | 10.90 | 76.06 | 0 | 0 | 0 | 0 | 0 | 0 | pure sweetness |
| D | 25% ethanol eluent | 2.22% | 0.101 | 6.85 | 30.90 | 0 | 0 | 0 | 0 | 0 | 0 | - |
| D | 60% ethanol eluent | 19.95% | 0.356 | 10.08 | 78.50 | 0 | 0 | 0 | 0 | 0 | 0 | pure sweetness |
| E | 25% ethanol eluent | 1.86% | 0.100 | 7.12 | 25.90 | 0 | 0 | 0 | 0 | 0 | 0 | |
| E | 60% ethanol eluent | 19.87% | 0.327 | 11.20 | 85.02 | 0 | 0 | 0 | 0 | 0 | 0 | |

### Example 19

360kg of fresh fruits of Luo Han Guo were crushed into small granules by a crusher, then put into a countercurrent extraction device, added with 900L of hot water at 90°C for extraction, then the extraction solution was treated by a juice extruder, centrifuged, and then clarified by ultrafiltration with ceramic membrane (pore diameter 200nm) to obtain ultrafiltration clear solution a.

The ion exchange resin columns consist of a strongly acidic cation exchange resin column and a weakly basic anion exchange resin column in series, and each column was filled with 126L of resin; the model of the resin for the strongly acidic cation exchange is DOWEX Marathon MSC, and the model of the resin for the weakly basic anion exchange is DOWEX Marathon WBA. The solution a was successively loaded into the cation exchange resin column and anion exchange resin column; and the columns were washed with purified water after the material was loaded; then the mixed deionized solution c was obtained by combining the column flow and the washing solution flowing through the ion exchange resin, with a solid content of 2.4%, a volume of 1005L, and a Mogroside V content of 5.8% in the dry matter of the solution, which is to be subjected to multistage adsorption separation and purification.

The multistage adsorption separation column group consists of 4 resin columns each filled with 4L of macroporous resin (SP700), numbered A, B, C and D, all of which were regenerated and washed with water for later use.

The deionized solution c was made to pass through the column A at a flow rate of 5L/h, and the column liquid was collected, then made to pass through column B at a flow rate of 5L/h, and the column liquid was collected, then the collected column liquid was made to sequentially pass through macroporous adsorption resin columns C and D; after loading, the total mass of Mogroside V in the ion exchange treatment solution passing through columns A and B was 2 times of the saturated adsorption mass of the corresponding resins for Mogroside V; each column was washed with 12L of purified water, then column A was directly eluted with 10L of 60% ethanol, and columns B, C and D were first eluted with 2BV of 25% ethanol and then eluted with 10L of 60% ethanol; the eluents were collected separately, concentrated and dried separately, the contents of Mogroside V, other glycosides, total carbohydrates and proteins were detected. The results are shown in Table 19.

**Table 19**

| No. of Colu mn | Eluent | Net weight of Mogros ide V (%) | Net weight of produc t (kg) | Content (%, dry matter) | | | | | | | | flavor |
|---|---|---|---|---|---|---|---|---|---|---|---|---|
| | | | | 11-O-Mo groside V | Mogro side V | Siamen oside I | Mogro side IV | Mogros ide III | Mogro side II | Protein s | total carbohy drates | |
| A | 60% ethanol eluent | 19.93% | 0.599 | 5.38 | 46.60 | 2.78 | 1.42 | 0.65 | 0.11 | 0 | 0 | Sweet in mouth at first, with a noticeable bitterness afterwards |
| B | 25% ethanol eluent | 3.90% | 0.128 | 8.81 | 42.63 | 1.92 | 0.14 | 0 | 0 | 0 | 0 | pure and long-lasting sweetness |
| B | 60% ethanol eluent | 21.87% | 0.466 | 10.24 | 65.69 | 0.02 | 0 | 0 | 0 | 0 | 0 | pure sweetness |
| C | 25% ethanol eluent | 2.91% | 0.133 | 6.61 | 30.67 | 0 | 0 | 0 | 0 | 0 | 0 | - |
| C | 60% ethanol eluent | 23.06% | 0.460 | 9.35 | 70.04 | 0 | 0 | 0 | 0 | 0 | 0 | pure sweetness |
| D | 25% ethanol eluent | 1.87% | 0.125 | 2.74 | 20.9 | 0 | 0 | 0 | 0 | 0 | 0 | - |
| D | 60% ethanol eluent | 22.60% | 0.445 | 5.67 | 71.16 | 0 | 0 | 0 | 0 | 0 | 0 | pure sweetness |

### Comparative example 1

300kg of fresh fruits of Luo Han Guo were crushed into small granules by a crusher, then put into a countercurrent extraction device, added with 1000L of hot water at 90°C for extraction, then the extraction solution was treated by a juice extruder, centrifuged, and then clarified by ultrafiltration with ceramic membrane (pore diameter 200nm) to obtain ultrafiltration clear solution a.

The ultrafiltration clear solution was loaded into a chromatography column (diameter 30cm * column height 90cm) filled with 50L macroporous resin (model SP700, particle size 250µm, specific surface area 1200m²/g) to treat and absorb mogrosides; and the column was washed with 200L of purified water, then eluted with 150L of 60% ethanol; the ethanol eluent was collected for vacuum concentration to obtain concentrated solution b comprising sweet glycosides with ethanol removed, with a net weight of 13.8kg, a solid content of 30%, and a Mogroside V content of 26.5% in the dry matter of the concentrated solution.

The concentrated solution was diluted with purified water to a solid content of 5%, to be subjected to ion exchange treatment.

The multistage adsorption separation column group consists of 3 resin columns each filled with 6L of macroporous adsorption resin (SP700), numbered A, B, and C, all of which were regenerated and washed for later use. The diluent of the concentrated solution was made to sequentially pass through the macroporous adsorption resin columns A, B and C at a flow rate of 3000ml/h; after loading, each column was washed with 12L of purified water, then column A was eluted directly with 60% ethanol, and columns B and C were eluted with 12L of 25% ethanol and then eluted with 60% ethanol, respectively; the eluents were collected and concentrated respectively to obtain the concentrated solutions of 60% ethanol eluent of each of columns A, B, and C; then each concentrated solution was diluted with purified water to a concentration of approximately Brix 5.0%, to be subjected to ion exchange treatment respectively.

The ion exchange resin columns consist of a strongly acidic cation exchange resin column and a weakly basic anion exchange resin column in series, and the resin amount of each column is 1.8L. The diluent of the concentrated solution was successively loaded into the cation exchange resin column and anion exchange resin column, wherein the model of the resin of the strongly acidic cation exchange is DOWEX Marathon MSC, and the model of the resin of the weakly basic anion exchange is DOWEX Marathon WBA; the column was washed with purified water after the material was loaded; then the mixed deionized solution was obtained by combining the column flow and the washing solution flowing through the ion exchange resin; then the deionized solution of each column was concentrated and dried respectively; and then the contents of Mogroside V, other glycosides, total carbohydrates and proteins were detected. The results are shown in Table 20.

**Table 20**

| No. of Colum n | Net weight of product (kg) | Content | | | | (%, dry matter) | | | | flavor |
|---|---|---|---|---|---|---|---|---|---|---|
| | | 11-O-Mogr oside V | Mogros ide V | Siamen oside I | Mogros ide IV | Mogrosi de III | Mogros ide II | Protei ns | total carbohydrat es | |
| A | 0.46 | 6.42 | 47.3 | 3.12 | 1.21 | 0.55 | 0.05 | 0 | 0 | Sweet in mouth at first, bitter later |
| B | 0.49 | 8.75 | 60.5 | 1.72 | 0.51 | 0.09 | 0.02 | 0 | 0 | Sweet in mouth at first, slightly bitter later |
| C | 0.42 | 9.03 | 64.7 | 1.08 | 0.13 | 0 | 0 | 0 | 0 | pure sweetness |

### Comparative example 2

300kg of fresh fruits of Luo Han Guo were crushed into small granules by a crusher, then put into a countercurrent extraction device, added with 1000L of hot water at 90°C for extraction, then the extraction solution was treated by a juice extruder, centrifuged, and then clarified by ultrafiltration with ceramic membrane (pore diameter 200nm) to obtain 1200L ultrafiltration clear solution a, to be subjected to multistage adsorption separation and purification.

The multistage adsorption separation column group consists of 4 resin columns each filled with 5L of macroporous adsorption resin (SP700), numbered A, B, C and D, all of which were regenerated and washed for later use. The aforementioned ultrafiltration clear solution a was made to sequentially pass through the macroporous adsorption resin columns A, B, C and D at a flow rate of 3900ml/h; after loading, each column was washed with 10L of purified water, then column A was eluted directly with 60% ethanol, and columns B, C and D were eluted with 10L of 25% ethanol and then eluted with 60% ethanol, respectively; the eluents were collected and concentrated respectively to obtain the concentrated solutions of 60% ethanol eluent of each of columns A, B, C and D; then each concentrated solution was diluted with purified water to a concentration of approximately Brix 5.0%, to be subjected to ion exchange treatment respectively.

The ion exchange resin columns consist of a strongly acidic cation exchange resin column and a weakly basic anion exchange resin column in series, the resin amount of each column is 1.5L. The diluent of the concentrated solution was successively loaded into the cation exchange resin column and anion exchange resin column, wherein the model of the resin of the strongly acidic cation exchange is DOWEX Marathon MSC, and the model of the resin of the weakly basic anion exchange is DOWEX Marathon WBA; the columns were washed with purified water after the material was loaded; then the mixed deionized solution was obtained by combining the column flow and the washing solution flowing through the ion exchange resin; then the deionized solution of each column was concentrated and dried respectively; and then the contents of Mogroside V, other glycosides, total carbohydrates and proteins were detected. The results are shown in Table 21.

**Table 21**

| No. of Column | Net weight of product (kg) | Content (%, dry matter) | | | | | | | | flavor |
|---|---|---|---|---|---|---|---|---|---|---|
| | | 11-O-Mogro side V | Mogro side V | Siameno side I | Mogrosi de IV | Mogroside III | Mogroside II | Proteins | total carbohy drates | |
| A | 0.43 | 6.63 | 42.9 | 3.43 | 1.28 | 0.67 | 0.05 | 0 | 0 | Sweet in mouth at first, bitter later |
| B | 0.41 | 8.75 | 58.8 | 1.43 | 0.48 | 0.1 | 0.00 | 0 | 0 | Sweet in mouth at first, slightly bitter later |
| C | 0.38 | 8.56 | 65.2 | 1.08 | 0.13 | 0 | 0 | 0 | 0 | pure sweetness |
| D | 0.22 | 8.20 | 64.8 | 0 | 0 | 0 | 0 | 0 | 0 | pure sweetness |

### Comparative example 3

280kg of fresh fruits of Luo Han Guo were crushed into small granules by a crusher, then put into a countercurrent extraction device, added with 1000L of hot water at 90°C for extraction, then the extraction solution was treated by a juice extruder, centrifuged, and then clarified by ultrafiltration with ceramic membrane (pore diameter 200nm) to obtain ultrafiltration clear solution a, to be subjected to multistage adsorption separation and purification.

The multistage adsorption separation column group consists of 3 resin columns each filled with 8L of macroporous adsorption resin (XAD16N), numbered A, B and C, all of which were regenerated and washed for later use. The aforementioned ultrafiltration clear solution a was made to sequentially pass through the macroporous adsorption resin columns A, B and C at a flow rate of 3200ml/h; after loading, each column was washed with 16L of purified water, then column A was eluted directly with 60% ethanol, columns B and C were eluted with 16L of 25% ethanol and then eluted with 60% ethanol, respectively; the eluents were collected and concentrated respectively to obtain the concentrated solutions of 60% ethanol eluent of each of columns A, B and C; then each concentrated solution was diluted with purified water to a concentration of approximately Brix 5.0%, to be subjected to ion exchange treatment.

The ion exchange resin columns consist of a strongly acidic cation exchange resin column and a weakly basic anion exchange resin column in series, the resin amount of each column is 1.8L, the model of the resin of the strongly acidic cation exchange is AMBERLITE FPC3500, and the model of the resin of the weakly basic anion exchange is SCAV2. The diluent of the concentrated solution was successively loaded into the cation exchange resin column and anion exchange resin column; and the columns were washed with purified water after the material was loaded; then the mixed deionized solution was obtained by combining the column flow and the washing solution flowing through the ion exchange resin; then the deionized solution of each column was concentrated and dried respectively; and then the contents of Mogroside V, other glycosides, total carbohydrates and proteins were detected. The results are shown in Table 22.

**Table 22**

| No. of Col umn | Eluent | Net weight of product (kg) | Content (%, dry matter) | | | | | | | | |
|---|---|---|---|---|---|---|---|---|---|---|---|
| | | | 11-O-M ogroside V | Mogrosi de V | Siameno side I | Mogrosi de IV | Mogrosi de III | Mogrosi de II | Proteins | total carbohy drates | flavor |
| A | 60% ethanol eluent | 0.56 | 6.78 | 52.30 | 2.43 | 1.22 | 0.51 | 0.06 | 0 | 0 | Sweet in mouth at first, bitter later |
| B | 60% ethanol eluent | 0.47 | 9.03 | 63.5 | 1.35 | 0.43 | 0.09 | 0.00 | 0 | 0 | Sweet in mouth at first, slightly bitter later |
| C | 60% ethanol eluent | 0.45 | 8.97 | 66.3 | 1.02 | 0.11 | 0 | 0 | 0 | 0 | **pure** sweetness |

The parameters of experimental conditions and effect data of each Example and Comparative example are listed in Table 23 below:

**Table 23**

| | Extrac tion tempe rature (°C) | Enrich after clarifi cation | Resin model of adsorbtion resin column A" used for enrichment | Resin model of strongly acidic cation exchange resin column for ion exchange | Resin model of weakly basic anion exchange resin column for ion exchange | Number of resin columns for multi-stag e adsorption separation | Model of resin column for multi-stag e adsorption separation | Volume of resin column for multi-stage adsorption separation | Multiple relat ionship betw een the total mass of Mogroside V in the ion exchange treatment solution passing through columns No.1, ..., No.x-1 (2≤x≤n) and the saturated adsorption mass of the correspondin g resin(s) for Mogroside V | content of Mogroside V in sweetening combination | x, n |
|---|---|---|---|---|---|---|---|---|---|---|---|
| Example 1 | 90 | yes | SP700 | DOWEX Marathon MSC | DOWEX Marathon WBA | 3 | SP700 | 6L | 2.6 times | 81.6% | 2, 3 |
| Example 2 | 90 | no | - | DOWEX Marathon MSC | DOWEX Marathon WBA | 4 | SP700 | 5L | 2 times | 83.9% | 3, 4 |
| Example 3 | 90 | no | - | AMBERL ITE FPC3500 | SCAV2 | 3 | XAD16N | 8L | 3 times | 77.37% | 2, 3 |
| Example 4 | 85 | no | - | AMBERL ITE FPC3500 | SCAV2 | 2 | XAD1600 N | 6L 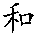 10L | 2.7 times | 74.54% | 2, 2 |
| Example 5 | 90 | yes | LX-15 | DOWEX Marathon MSC | SCAV2 | 5 | Column A: SP700 resin; | 5.5L, 4.5L, 2.25L, 2.25L, 2.25L | 1.7 times | 83.1% | 3, 5 |
| | | | | | | | Column B: XAD1600 N resin; | | | | |
| | | | | | | | columns C, D and E: XAD1600 N resin | | | | |
| Example 6 | 90 | no | - | DOWEX Marathon MSC | SCAV2 | 4 | SP700 | 5L | 2 times | 84.7% | 3, 4 |
| Example 7 | 90 | no | - | AMBERL ITE FPC22H | DOWEX Marathon WBA | 4 | SP700 | 5L | 2 times | 79.6% | 2, 4 |
| Example 8 | 90 | no | - | DOWEX Marathon MSC | LX-T5 | 4 | SP700 | 5L | 2 times | 80.4% | 4, 4 |
| Example 9 | 90 | no | - | AMBERL ITE FPC22H | FPA53 | 4 | SP700 | 5L | 2 times | 76.2% | 3, 4 |
| Example 10 | 90 | no | - | FPC88 UPS Na | FPA66 UPS | 4 | SP700 | 5L | 2 times | 75.5% | 3, 4 |
| Example 11 | 90 | no | - | DOWEX Marathon MSC | DOWEX Marathon WBA | 2 | SP700 | 5L | 1.2 times | 84.65% | 2, 2 |
| Example 12 | 90 | no | - | DOWEX Marathon MSC | DOWEX Marathon WBA | 2 | SP700 | 5L | 1.5 times | 83.2% | 2, 2 |
| Example 13 | 90 | no | - | DOWEX Marathon MSC | DOWEX Marathon WBA | 3 | SP700 | 5L | 2.2 times | 84.3% | 2, 3 |
| Example 14 | 90 | no | - | DOWEX Marathon MSC | DOWEX Marathon WBA | 3 | SP700 | 5L | 3 times | 84.3% | 2, 3 |
| Example 15 | 90 | no | - | DOWEX Marathon MSC | DOWEX Marathon WBA | 4 | SP700 | 5L | 3.5 times | 82.86% | 3, 4 |
| Example 16 | 90 | no | - | DOWEX Marathon MSC | DOWEX Marathon WBA | 4 | AB-8 | 4L | 2 times | 74.32% | 3, 4 |
| Example 17 | 90 | no | - | DOWEX Marathon MSC | DOWEX Marathon WBA | 4 | D101 | 4L | 2 times | 72.5% | 3, 4 |
| Example 18 | 90 | no | - | DOWEX Marathon MSC | DOWEX Marathon WBA | 5 | SP700 | 4L | 2.5 times | 85.02% | 3, 5 |
| Example 19 | 90 | no | | DOWEX Marathon MSC | DOWEX Marathon WBA | 4 | SP700 | 5L | 2 times | 71.16% | 3, 4 |
| Compara tive example 1 | 90 | yes | SP700 | DOWEX Marathon MSC | DOWEX Marathon WBA | 3 | SP700 | 6L | - | 64.7% | - |
| Compara tive example 2 | 90 | no | - | DOWEX Marathon MSC | DOWEX Marathon WBA | 4 | SP700 | 5L | - | 64.8% | - |
| Compara | 90 | no | - | AMBERL | SCAV2 | 3 | XAD16N | 8L | - | 66.3% | - |
| tive example 3 | | | | ITE FPC3500 | | | | | | | |

It can be seen from the comparison of the above Examples and Comparative examples that, the extraction solution of the fruit of Luo Han Guo was directly subjected to multigrade adsorption separation without ion exchange treatment and a mogroside composition with 70% or more of Mogroside V was not obtained, indicating that the ingredients of the material without ion exchange treatment is too complex and affects the separation efficiency of the adsorption resin, thus indicating the necessity of placing the ion exchange treatment process before adsorption separation process.

The effect of extracting Mogroside V in this application is comprehensively evaluated from two perspectives: the purity of the obtained product and the proportion of the obtained high-purity product. The higher the purity of the obtained product, the greater the proportion of high-purity products, and the better the effect. When comparing the separation and purification effects of each Example and Comparative example, if the contents of Mogroside V separated from the last resin columns were close, the greater the sum of the net weight ratio of Mogroside V obtained from each resin column with more than 70% or more of Mogroside V, the better the separation and purification effect; if the sums of the net weight of Mogroside V obtained from each resin column with 70% or more of Mogroside V were close, the greater the content of Mogroside V obtained from the last resin column, the better the separation and purification effect.

### Experimental Examples

1. Methods for detecting the ingredients in fruit products of Luo Han Guo
1.1 Method for detecting the content of Mogroside V
Mogroside V was detected by the method corresponding to the national standard GB 1886.77-2016;
1.2 Method for detecting the content of other mogrosides in the fruit of Luo Han Guo
Mogrosides were detected by external standard method of high performance liquid chromatography. The chromatographic conditions and sample operation methods are as follows:
1.2.1 Chromatographic conditions
1.2.1.1 Chromatography column: ZORBAX SB-C18, 4.6 × 250mm, 5µM.
1.2.1.2 The mobile phase and the corresponding gradients are shown in Table 24:

**Table 24**

| Gradient No. | Time (min) | The composition of the mobile phase | |
|---|---|---|---|
| | | Acetonitrile (%) | ultrapure water (%) |
| 1 | 0 | 20 | 80 |
| 2 | 10 | 20 | 80 |
| 3 | 18 | 22 | 78 |
| 4 | 45 | 30 | 70 |
| 5 | 55 | 20 | 80 |

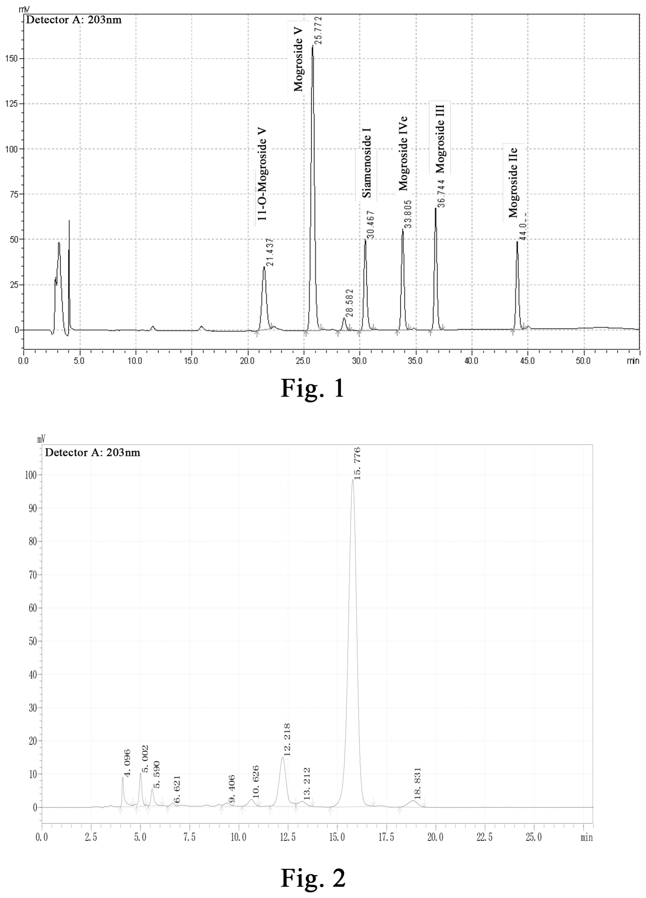

1.2.1.3 Detector: Diode array UV detector
1.2.1.4 Detection wavelength: 203nm
1.2.1.5 Column temperature: 30°C
1.2.1.6 Sample volume: 20 µL
1.2.2 Sample operation method
1.2.2.1 The reference substances of Siamenoside I, Mogroside IIe, Mogroside III, Mogroside IVe, 11-O-Mogroside V, and Mogroside V were accurately weighed, and then dissolved in purified water to prepare standard solutions of Siamenoside I, Mogroside IIe, Mogroside III, and Mogroside IVe with four concentrations of 0.015mg/ml, 0.03mg/ml, 0.045mg/ml, and 0.075mg/ml, standard solutions of 11-O-Mogroside V with concentrations of 0.03mg/ml, 0.06mg/ml, 0.09mg/ml and 0.15mg/ml respectively, and standard solutions of Mogroside V with concentrations of 0.1mg/ml, 0.2mg/ml, 0.3mg/ml and 0.5mg/ml. Samples were loaded and detected according to the above chromatographic conditions. The HPLC chromatograms of various glycosides in the fruit of Luo Han Guo are shown in Fig. 1, and the peak area data were collected to prepare the external standard curves of each reference substance.
1.2.2.2 An appropriate amount of sample was accurately weighed, dissolved in ultrapure water and prepared into a sample solution of about 3mg/ml at constant volume, detected by liquid chromatography according to the above chromatographic conditions; then the chromatograms were collected, and the ingredients in the sample are identified according to the retention time of each standard, and then quantitatively analyzed according to the corresponding standard curve, and the content of each ingredient is calculated.

1.3 Method for detecting the protein content of fruit products of Luo Han Guo
The first method in GB 5009.5-2016 was used to detect the protein content of fruit products of Luo Han Guo in this application.
1.4 Method for detecting the total carbohydrate content of fruit products of Luo Han Guo
The first method in GB 5009.8-2016, HPLC-RID was used to detect the total carbohydrate content of fruit products of Luo Han Guo in this application.
**2. Taste test of samples comprising Mogroside II and Mogroside III**

Mogroside II and Mogroside III are representative ingredients of immature fruit of Luo Han Guo, with bitter taste, wherein Mogroside II is extremely bitter (Guangxi Institute of Botany, Chinese Academy of Sciences, "Cultivation and Chemistry Research of Luo Han Guo", 1st edition, Nanning: Guangxi Science and Technology Press, May 2010). If the bitter ingredients in the product cannot be controlled at a certain level, it will directly affect the overall taste of the product.

The sample obtained by elution after separation by resin column A in Example 1 was purified and dissolved in purified water according to concentrations from low to high; then the taste performance was tasted and recorded, and the results are shown in Table 25.

**Table 25**

| Sample No. | Concentration of dry matter(%) | Concentration of pure Mogroside III(%) | Concentration of pure Mogroside II(%) | Testing results |
|---|---|---|---|---|
| 1 | 0.00029 | 2.5×10⁻⁶ | 4.3×10⁻⁶ | Tasteless |
| 2 | 0.00058 | 5.0×10⁻⁶ | 8.5×10⁻⁶ | Tasteless |
| 3 | 0.00288 | 2.5×10⁻⁵ | 4.3×10⁻⁵ | Slightly sweet in mouth first, with slight bitterness after about 5 seconds |
| 4 | 0.00577 | 5.0×10⁻⁵ | 8.5×10⁻⁵ | Slightly sweet in mouth first, with slight bitterness after about 5 seconds and lasting for long time |
| 5 | 0.01442 | 1.3×10⁻⁴ | 2.1×10⁻⁴ | Sweet in mouth first, with noticeable bitterness after about 3 seconds, reaching bitterness peak at 5 seconds, lasting for about 2 minutes. |
| 6 | 0.02883 | 0.00025 | 0.00043 | Sweet in mouth first, with noticeable bitterness after about 3 seconds, reaching bitterness peak in 5 seconds, lasting for about 3 minutes. The Bitterness and sweetness are more obvious than the previous sample. |

The test results in Table 25 above confirmed the statement that Mogroside II and Mogroside III are bitter ingredients in literatures, and showed that even products comprising Mogroside II and Mogroside III at a lower concentration still have significant bitter taste, indicating that it is necessary to control the content of these two ingredients in products for use.

### 3. Comparison of sweetness characteristics between 11-O-Mogroside V and Mogroside V in the fruit of Luo Han Guo

A sample with the purity of 11-O-Mogroside V of about 77.3% was separated and prepared, and an appropriate amount of the sample was blended to achieve 5% of the relative sweetness of sucrose; and an appropriate amount of conventional sample without separation and purification (without multi-column separation and purification after ion exchange) was was blended to achieve 5% of the relative sweetness of sucrose; then the taste test and comparison were conducted, and the peak time and duration of sweetness were investigated and recorded. The results are shown in Table 26.

**Table 26**

| Sample No. | 11-O-Mogroside V | Mogroside V | Time to reach the peak of sweetness (seconds) | Duration of sweetness (seconds) |
|---|---|---|---|---|
| 1 | 77.3% | 0.098% | 5.00 | 19.83 |
| 3 | 37.57% | 10.48% | 5.43 | 24.86 |
| 2 | 28.63% | 29.00% | 5.25 | 33.60 |
| 4 | 7.57% | 57.39% | 6.35 | 36.64 |

11-O-Mogroside V in mogroside products is conducive to improving the response speed of sweetness, and shortening the sweetness performance to a certain extent, so that the overall taste of the sweetener is closer to sucrose, and the edible experience of the product is improved, which indicates that the higher the purity of Mogroside V, the better it is not necessarily. It is a better combination and process scheme to remove the ingredients having negative effects on the taste of the product, such as Mogroside II and Mogroside III, while retaining the ingredients having facilitating effect on the overall taste improvement, such as 11-O-Mogroside V, and make it have a certain content level, and it can also prepare a better composition.

The above are only preferred examples of the present application and do not impose any other kind of limitation on this application. Any technical personnel skilled in the art may use the above disclosed technical content to change or modify them into equivalent examples with equivalent changes. However, any simple modifications, equivalent changes or modifications made to the above examples based on the technical essence of this application, which have not deviated from the content of the technical solution of this application, still fall within the scope of protection of the technical solution of this application.

## Claims

1. A sweetening composition, based on the total weight of the sweetening composition, which comprises:
70-85% Mogroside V;
5-12% 11-O-Mogroside V;
0-0.5% Siamenoside I;
0-0.05% Mogroside II and Mogroside III; and
0-0.5% protein and 0-0.5% total carbohydrate.

2. A method for preparing a sweetening composition, which comprises the following steps:
extraction: extracting from the fruit of Luo Han Guo to obtain an extraction solution;
clarification: clarifying the extraction solution to obtain clarified liquid;
ion exchange treatment: sequentially treating the clarified liquid with a strongly acidic cation exchange resin column and a weakly basic anion exchange resin column to obtain an ion exchange treatment solution; and
multistage adsorption separation: making the ion exchange treatment solution run through the adsorption resin column combination for multistage adsorption separation, eluting, collecting eluent, and drying to obtain a sweetening composition;
wherein the step of ion exchange treatment should be carried out before the step of multistage adsorption separation.

3. The method according to claim 2, wherein the ion exchange treatment solution sequentially runs through the first, second, ..., and nth (n≥2) adsorption resin column of the adsorption resin column combination for multistage adsorption separation, wherein the separated column liquid obtained from each adsorption resin column directly runs through the next adsorption column; or
the ion exchange treatment solution sequentially passes through the first, second, ..., and nth (n≥2) adsorption resin column of the adsorption resin column combination for multistage adsorption separation, wherein after passing through each of the first to (x-1)th (n≥x≥2) adsorption resin columns, the separated column liquid obtained after passing through each adsorption resin column are collected and combined, and then loaded into the next adsorption resin column for separation; then, the column liquid collected after passing through the (x-1)th adsorption resin column is loaded to sequentially run through the xth, (x+1)th, (x+2)th,..., and nth adsorption resin columns for adsorption separation.

4. The method according to claim 3, wherein after the multistage adsorption separation, the sweetening composition is obtained from each of the xth to nth (2≤x≤n) adsorption resin columns.

5. The method according to claim 4, wherein in the step of multistage adsorption separation, the mass of Mogroside V in the ion exchange treatment solution passing through the first, ..., (x-1)th (2≤x≤n) adsorption resin columns is 1-4 times, preferably 1-3 times, more preferably 1.5-3 times of the sum of the saturated adsorption mass of the first to (x-1)th adsorption resin columns for Mogroside V.

6. The method according to any one of claims 2-5, further comprising a step of mogroside enrichment through the adsorption resin column A" after the step of clarification and before the step of ion-exchange treatment.

7. The method according to claim 6, wherein the adsorption resin column A" is a weakly polar macroporous adsorption resin column;
preferably, the adsorption resin column A" is a macroporous adsorption resin column with polyethylene divinylbenzene as the skeleton material;
preferably, the particle size of the resin is 250-1250µm, more preferably 250-450µm; and
preferably, the model of the resin of the adsorption resin column A" is any one selected from the group consisting of: LX-15, D101, AB-8, SP700, XD16N and XD1600N, more preferably SP700.

8. The method according to any one of claims 2-7, wherein the extraction solution is obtained by extracting with hot water.

9. The method according to any one of claims 2-8, wherein the clarified liquid is obtained by centrifugation and/or filtration.

10. The method according to any one of claims 2-9, wherein the particle size of the resin of the strongly acidic cation exchange resin column is 300-1100µm, preferably 300-600µm;
preferably, the resin of the strongly acidic cation exchange resin column is any one selected from the group consisting of: Marathon MSC, AMBERLITE FPC22H, DIAION SK series and DIAION PK series, more preferably Marathon MSC;
preferably, the particle size of the resin of the weakly basic anion exchange resin column is 350-1250µm, more preferably 350-600um; and
preferably, the resin of the weakly basic anion exchange resin column is any one selected from the group consisting of: Marathon WBA, SCAV2, FPA53 and LX-T5, more preferably Marathon WBA or SCAV2.

11. The method according to any one of claims 2-10, wherein each adsorption resin column used in the step of multistage adsorption separation is weakly polar macroporous adsorption resin column;
preferably, the each adsorption resin column is macroporous adsorption resin column with skeleton material of polyethylene divinylbenzene; and
preferably, the resin of each adsorption resin column is any one selected from the group consisting of: LX-15, D101, AB-8, SP700, XD16N and XD1600N, more preferably SP700.

12. The method according to any one of claims 2-11, wherein the multistage adsorption separation is carried out through two or more, preferably two to six adsorption resin columns.

13. The method according to any one of claims 2-12, wherein based on the total weight of the sweetening composition, the sweetening composition comprises:
70-85% Mogroside V;
5-12% 11-O-Mogroside V;
0-0.5% Siamenoside I;
0-0.05% Mogroside II and Mogroside III; and
0-0.5% protein and 0-0.5% carbohydrate.

14. The method according to any one of claims 2-13, wherein in the step of multistage adsorption separation, after the ion exchange treatment solution is loaded, the adsorption resin column combination is first eluted with water or a first organic solvent, and then eluted with a second organic solvent;
preferably, the first organic solvent is ethanol with concentration of 10-30%; and
preferably, the second organic solvent is any one or two selected from the group consisting of hydrophilic ketones and lower alcohols;
more preferably, the second organic solvent is any one or more selected from the group consisting of: methanol, ethanol, propanol and acetone;
still more preferably, the second organic solvent is ethanol with concentration of 55% or more.
